# EUROPEAN PATENT SPECIFICATION

(11) **EP 2 719 123 B1**
(45) Date of publication and mention of the grant of the patent: **30.11.2016**
(21) Application number: 12725142.9
(22) Date of filing: 25.05.2012
(51) Int. Cl.: H04L 12/26, G06F 9/54

(54) **MESSAGE INTEROPERABILITY BETWEEN PLATFORMS**
NACHRICHTENINTEROPERABILITÄT ZWISCHEN PLATTFORMEN
INTEROPÉRABILITÉ DE MESSAGE ENTRE PLATEFORMES

(30) Priority: 07.06.2011 GB 201109535
(43) Date of publication of application: 16.04.2014
(73) Proprietor: BAE SYSTEMS PLC, London SW1 5AD (GB)
(72) Inventor: HOLMES, Christopher, Kenneth, Ashtead Surrey KT21 2UE (GB); JOHNSON, Julian, Frazer, Ewart, Preston Lancashire PR4 1AX (GB)
(74) Representative: BAE SYSTEMS plc Group IP Department
(86) International application number: PCT/GB2012/051180
(87) International publication number: WO 2012/168692

(56) References cited:
- GB-A- 2 409 619
- US-A1- 2006 251 047
- US-A1- 2009 036 750
- SUSS J G ET AL: "Towards Integrated Model-Driven Testing of SCADA Systems Using the Eclipse Modeling Framework and Modelica", SOFTWARE ENGINEERING, 2008. ASWEC 2008. 19TH AUSTRALIAN CONFERENCE ON, IEEE, PISCATAWAY, NJ, USA, 26 March 2008 (2008-03-26), pages 149-159, XP031241091, ISBN: 978-0-7695-3100-7
- ABDULLAHL M S ET AL: "Modelling knowledge based systems using the executable modelling framework (XMF)", CYBERNETICS AND INTELLIGENT SYSTEMS, 2004 IEEE CONFERENCE ON SINGAPORE 1-3 DEC. 2004, IEEE, PISCATAWAY, NJ, USA, vol. 2, 1 December 2004 (2004-12-01), pages 1055-1060, XP010812886, DOI: 10.1109/ICCIS.2004.1460735 ISBN: 978-0-7803-8643-3

## Description

The present invention relates to platforms communicating over a Tactical Data Link.

The domain of the Tactical Data Links (TDLs/TADIL) comprises a family of related technologies that have been developed over many years to coordinate and control the dissemination of information within the battlespace to support joint and combined operations. Consequently, various forms of TDL have been developed to support specific battle groups. The TDLs feature differing waveforms, bandwidths, protocols and capabilities. The US identifies members of the domain of TADILs via a postfix identifier (e.g. A, B, C, F, J, K, M). In addition to these, a number of TDLs are under development to support specific roles, such as the control of autonomous vehicles and intelligence video feeds.

The TDLs are generally defined by either, and in some cases both, of two families of standards: NATO STANAGs and US Department of Defense MIL-STDs. Although only partial coverage of the TDLs is provided, each standard provides a definition of one or more variant of TDL implementation. There also exist standards relating to the data forwarding from one TDL to another, e.g. STANAGs 5601 & 5616. It is important to note that these standards are document-based and, in some cases, very large indeed, in the case of MIL-STD-6016D extending to 8800 pages.

The exchange of information across the TDL at the brain-to-brain level is based on the common understanding of a clear semantics of the messages to be exchanged by cooperating assets. Unfortunately, the standards (STANAG 5516 & MIL-STD-6016C) describing the most widely used TDL, Link 16 (or TADIL-J), do not provide an adequate level of rigour and are not based on any discernable model. The standards are expressed primarily in narrative form and are voluminous; for instance, MIL-STD-6016D comprises in excess of 8800 pages. Furthermore, the standards describe the link requirements for all possible domains; in practice, most platforms will only implement a subset of the standard as is deemed appropriate to the platform's role (e.g. fighter, bomber, reconnaissance, etc.). However, the standards do not provide an explicit definition of common platform profiles.

This situation leads to variations in TDL implementations across similar platforms and the situation is exacerbated by the use of terminals produced by different vendors. The resulting situation makes an analysis of platform interoperability very labour intensive and potentially error prone. Furthermore, the interoperability analyses tend to occur towards the end of the life-cycle after the equipment has been specified and developed, making changes and/or corrections expensive in terms of both time and finances.

Assessing a TDL platform's compliance against the link standard (e.g. as described by MIL-STD-6016C) is therefore a challenging task. The TDL standards (such as 6016C) are known to suffer from a number of issues, such as: use of natural language; ambiguity; document size and structure, and consistency and completeness.

US2009/036750 describes a system and process for integrating and controlling medical devices in a clinical environment, wherein an integration and management controller utilises a protocol described within each device model to provide a so-called 'plug-and-play interface to which medical devices can be coupled and integrated into the overall system.

US2006/251047 describes an application module for receiving data from a number of applications and converting data into a standard data component, thereby providing an interface between the applications.

GB2409619 describes a toolkit which includes a message database containing a list of all possible messages which may be transmitted in accordance with a predetermined standard, and a field database containing a list of all possible fields which may be found within a message transmitted in accordance with the standard, for the purpose of validating compliance of an item of communications equipment with the standard.

SUSS J G et al: "Towards Integrated Model-Driven Testing of SCADA Systems Using the Eclipse Modelling Framework and Modelica", IEEE, PICATAWAY, NJ, USA, 26th March 2008 describes a strategy using EMF as a common basis for model-driven development, using simulation features in integration with a custom-designed testing process. With the described tooling, a test engineer can model all aspects of a SCADA test within one workbench with full traceability between the proprietary test model, and its surrounding environment simulation.

ABDULLAH M S et al: "Modelling knowledge based systems using the executable modelling framework (XMF)", IEEE, PICATAWAY, NJ, USA, 1st December 2004 describes the adoption of a profile mechanism for the design of knowledge-based systems. The profile is created using the meta-model extension approach of UML and is based on XMF (executable Meta-modelling Framework).

Embodiments of the present invention are intended to address at least some of the problems discussed above in relation to Tactical Data Links. In accordance with a first aspect of the invention, there is provided a method, implemented in a computer system including a processor and a memory, for assessing message interoperability between a first platform and a second platform communicating over a link, the method comprising the steps of:
obtaining first platform model data representing platform-specific message transmit/receive information over the link for the first platform;
obtaining second platform model data representing platform-specific message transmit/receive information over the link for the second platform, and
using the first platform model data and the second platform model data to assess message interoperability between the first platform and the second platform; the method being characterized in that said link is a Tactical Data Link, TDL, and by comprising the steps of:
   parsing, using said computer system, data derived from at least part of the standards document relating to the TDL to generate at least one model template based on to the TDL standards document;
   parsing, using said computer system, Actual Platform Implementation Specification data associated with said first platform against said model template to generate said first platform model data;
   parsing, using said computer system, Actual Platform Implementation Specification data associated with said second platform against said model template to generate said second platform model data; and
   performing said assessment of message interoperability between the first platform and the second platform using a message interoperability assessment tool in the computer system configured to:
      - analyse said first and second platform model data by comparing therein respective communication characteristics of said first and second platforms to determine whether said second platform is capable of receiving at least one message type sent by said first platform in order to determine the message interoperability, and
      - output a report representative of said analysis.

The first platform model data can specify a set of message types and at least some of the message types can have an associated Data Field Identifier (DFI), an associated Data Use Identifier (DUI), and zero or more Data Items (DIs). The second platform model data can also specify a set of message types and at least some of the message types can have an associated Data Field Identifier (DFI), an associated Data Use Identifier (DUI), and zero or more Data Items (DIs). The models of both transmitting and receiving platforms can also accommodate aliasing of Data Item (DI) fields such that a platform may indicate that it receives a particular DI value but interprets this value as if some other value had been received. Furthermore, the models can also accommodate asymmetric transmit/receive characteristics of DIs such that a platform could apply different semantics to a specific DI value for transmit and receive purposes. The checking of whether the second platform is capable of receiving the message type sent by the first platform can include checking whether the associated DFI/DUI and the associated collection of DIs of a said message type have matching values and transmit/receive characteristics in the first and the second platform model data, e.g. to confirm that the first platform can transmit the DI value x within a given message and DFI/DUI and the second platform can receive the same DI value within the same message and DFI/DUI, and accommodating the possibility of an aliased value.

The model template may comprise an executable model, e.g. one or more files compatible with a relevant tool such as XMF or the Eclipse Modelling Framework (EMF).

The TDL standard document may comprise a Link 16 Standard document. Message information in the model template may be derived from at least part of a Data Dictionary portion of the standards document. The message information in the model template may be derived from at least part of a Message Catalogue portion of the standards document. The message transmit/receive information in the first and/or the second platform model data may be derived from a J-Message transmit/receive portion of the APIS. The message transmit/receive information may be used to associate DFI/DUI and DI data with a message type.

The method may include rendering results of the interoperability analysis in a variety of forms that may include (but not limited to) HTML.

According to another aspect of the present invention there is provided a method of generating at least one model for assessing message interoperability between platforms communicating over a TDL substantially as described herein.

According to other aspects of the present invention there are provided systems configured to execute methods substantially as described herein.

According to other aspects of the present invention there is provided a computer program element comprising: computer code means to make the computer execute methods substantially as described herein. The element may comprise a computer program product.

According to other aspects of the present invention there is provided a computer program element comprising: computer code means to make the computer execute methods substantially as described herein. The element may comprise a computer program product.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:
Figure 1 schematically illustrates an example of message interoperability analysis for two platforms communicating over a TDL network, including a computing device configured to execute a tool for assessing message interoperability;
Figure 2 illustrates steps performed in order to be able to assess message interoperability, including use of the tool;
Figure 3 illustrates an example of TDL linkage;
Figure 4 illustrates a set of interrelated models that can be used by the tool;
Figure 5 is a collaboration diagram illustrating steps performed by embodiments of the method, including generating models;
Figure 5A illustrates an example DFI/DUI definition;
Figure 6 is another collaboration diagram illustrating steps performed by embodiments of the method, including generating models;
Figure 6A illustrates an example J-Word J0.6I definition;
Figure 6B illustrates an XML representation resulting from parsing the definition of Figure 6A;
Figures 7 - 8 are collaboration diagrams illustrating steps performed by embodiments of the method, including generating models;
Figure 9 is an abstract system architecture diagram;
Figure 10 illustrates a domain model;
Figure 11 illustrates a data elements model;
Figure 12 is an example screen display relating to the data elements model;
Figures 13 and 14 illustrate message and J-Messages models, respectively;
Figure 15 is an example screen display relating to the J-Messages model;
Figure 16 illustrates a message specification package structure;
Figures 17 and 18 illustrate J-Message and J-Word, respectively, specifications models;

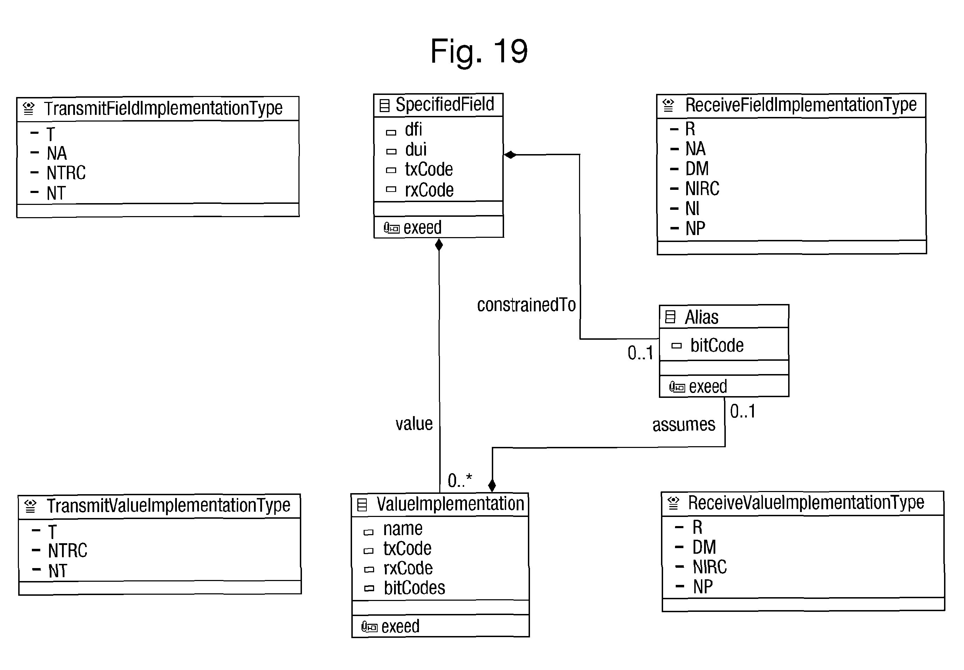

Figure 19 illustrates a J-Field specifications model;
Figure 20 is an example screen display relating to a platform specification model;
Figure 21 shows example code relating to comparison of specified message instances;
Figure 22 illustrates a document model;
Figure 23 shows example code relating to document model transformation;
Figure 24 illustrates schematically document transformation, and
Figures 25 and 26 are example screen displays showing interoperability analysis reports.

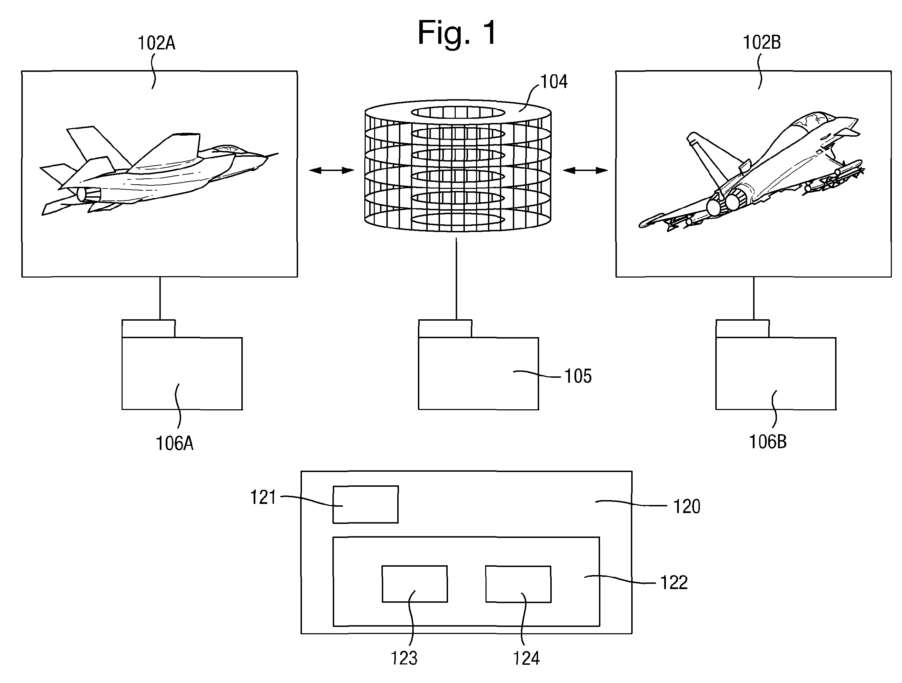

Figure 1 shows a first platform 102A and a second platform 102B. In the example the platforms comprise two different types of aircraft, although the term "platform" is intended to be interpreted broadly and can cover any type of vehicle, installation, etc, that needs to be put into communication with another platform of the same or different type. In the example the platforms communicate tactical data via a Link 16 TDL network 104, although it will be understood that embodiments of the present invention can be produced for dealing with any type of data being transferred over any type of TDL.

The Link 16 communication characteristics for each of the platforms 102A, 102B are defined by respective specifications, which in the example take the form of the underlying communication link standard(s) - the TDL base standard 105 - and the elements of the base standard implemented by the platform 106A and 106B, which may comprise Actual Platform Implementation Specification (APIS).

Figure 1 further schematically shows a computing device 120 including a processor 121 and a memory 122 storing a tool 123 for executing a method of assessing message interoperability. The computing device may be located onboard either or both of the platforms 102A, 102B, or at a remote location. Data based on the base standard and the implementation 106A, 106B is processed to produce a model 124 that represents communication characteristics of the platforms. The model can be used by the tool 123 for running queries that assist with assessing message interoperability between the platforms.

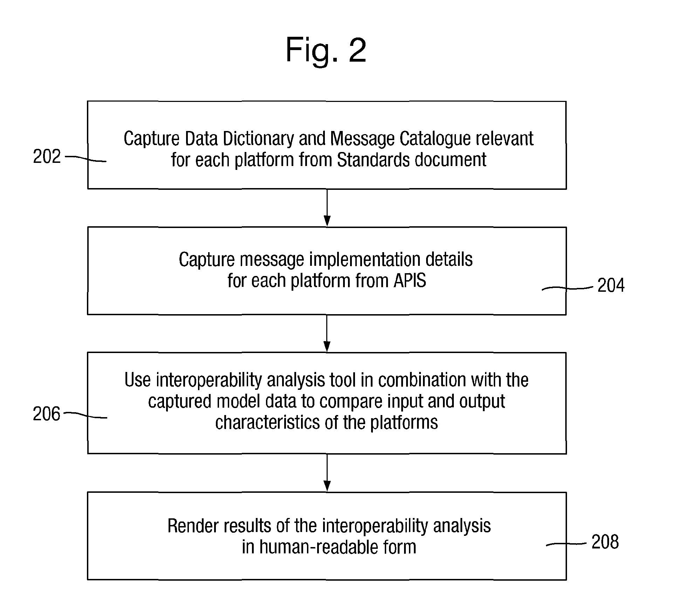

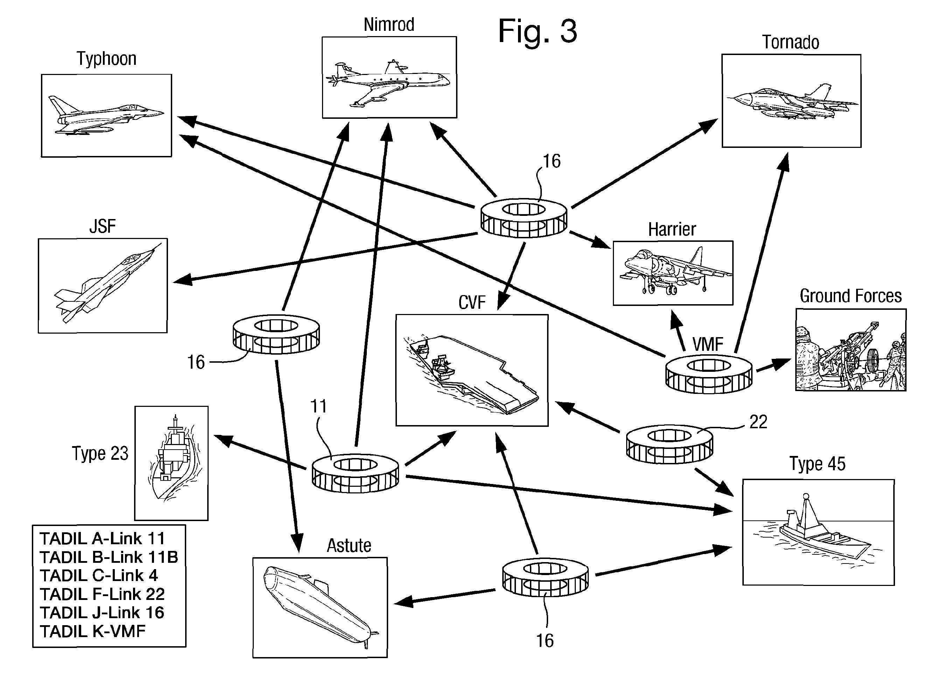

Figure 2 illustrates steps that can be performed in order to be able to assess message interoperability over a TDL link. A description of the system can be created and this can be illustrated by a number of collaboration diagrams showing the types of communicating analysis objects required using three standard stereotypes: boundary, control, and entity. Four main tasks are required. In the first of these, labelled step 202, the TDL Engineer captures the Data Dictionary and Message Catalogue relevant to each platform in question (in the example described in detail herein the discussion is restricted to the Data Dictionary and Message Catalogue defined for Link 16 (see US Department of Defence, *'Tactical Data Link (TDL) 16 Message Standard',* MIL-STD-6016C, 31-Mar-2004), although it should be noted that there are both other families of data link (as illustrated in Figure 3) and also other standardisation documents, e.g. STANAGs, for which the method can be adapted).

At step 204 the TDL Engineer captures the message implementation details for each platform in question from the relevant document (typically, this is provided by the APIS). The data captured at steps 202 and 204 are used to produce model data 124 and at step 206 the TDL Engineer uses the interoperability analysis tool 123 in combination with the model data to compare the field-level input and output characteristics of the platforms (which may comprise two instances of the same platform if "own-ship" interoperability is to be assessed - one would do this if one wished to confirm message-level interoperability between two platforms of the same type). At step 208, the TDL Engineer renders the results of the interoperability analysis in some human-readable form, e.g. HTML. The model-based approach adopted by the embodiments provides flexibility in output formats, hence MS Word™, MS Excel™, etc. can be supported with ease.

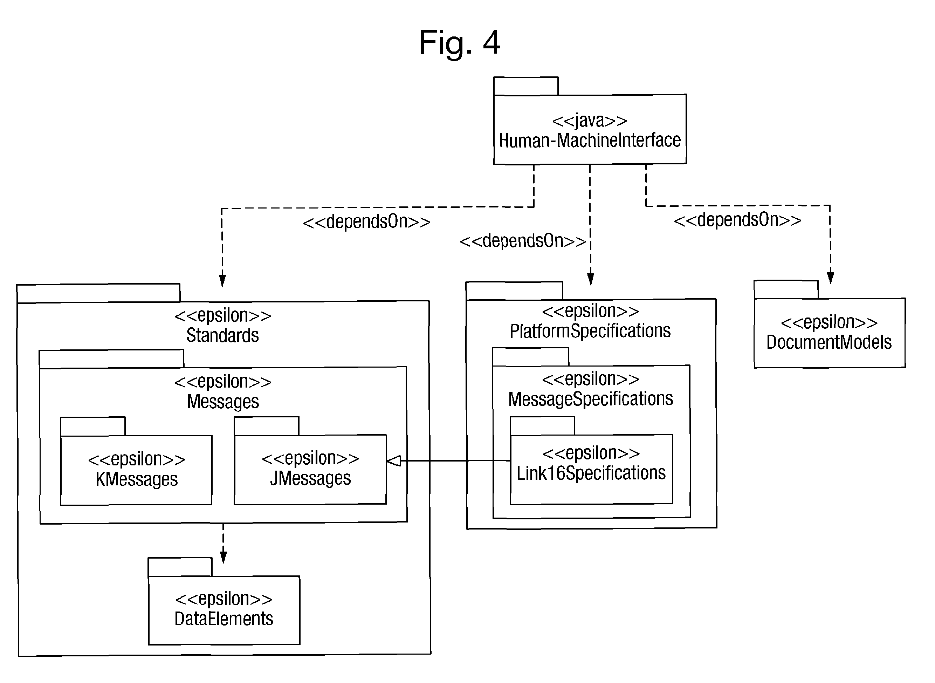

As a result of an analysis of the information contained in the source material documenting the message set in both the TDL standard (the "base standard") and the platform implementation (the APIS), and the desire to separate semantic from presentation aspects the present inventors have designed a set of interrelated models in the UML packages Standards, PlatformSpecifications, and DocumentModels (see Figure 4). Whilst a number of different data link technologies are deployed in the battlespace, the embodiment detailed herein relates to the Link 16 message family (J-messages), although other message families exist, e.g. VMF uses the K-message family, Link 11 uses the M-message family, etc, and the embodiments could be adapted to assess interoperability of platforms using these.

The source material comprises a document-centric approach to the definition of both the TDL standard and the implementation provided by individual platforms. This information is voluminous (e.g. a current Link 16 standard is in excess of 8800 pages) and difficult to verify as correct. Embodiments described herein use document parsers to capture the document-based information in the form of populated models and the approach taken is to parse the source material via a number of hand-written parsers and generate a number of XML documents conforming to defined schemata. The use of an associated XML schema provides both well-formedness and validity checking of the XML documents. These XML documents are then parsed into a modelling tool to instantiate the relevant models and perform the interoperability analysis and rendering of results. Specific embodiments use both XMF (Mosaic) and the Eclipse Modelling Framework (EMF; see, for example, Stienberg, D., Budinsky, F., Paternostro, M., Merks, E., 'EMF - Eclipse Modeling Framework', 2nd ed., Addison-Wesley, 2008), hence the interoperability analysis approach is not dependent upon any particular implementation technology. It should be noted that an additional benefit of a model-based approach, (re)capturing the source material in the form of an executable model is that well-formedness constraints may be applied to the resulting instantiation. Link-specific constraints may be provided to ensure well-formedness of the instantiated models, e.g. Link 16 requires that each J-Message contains exactly one Initial Word.

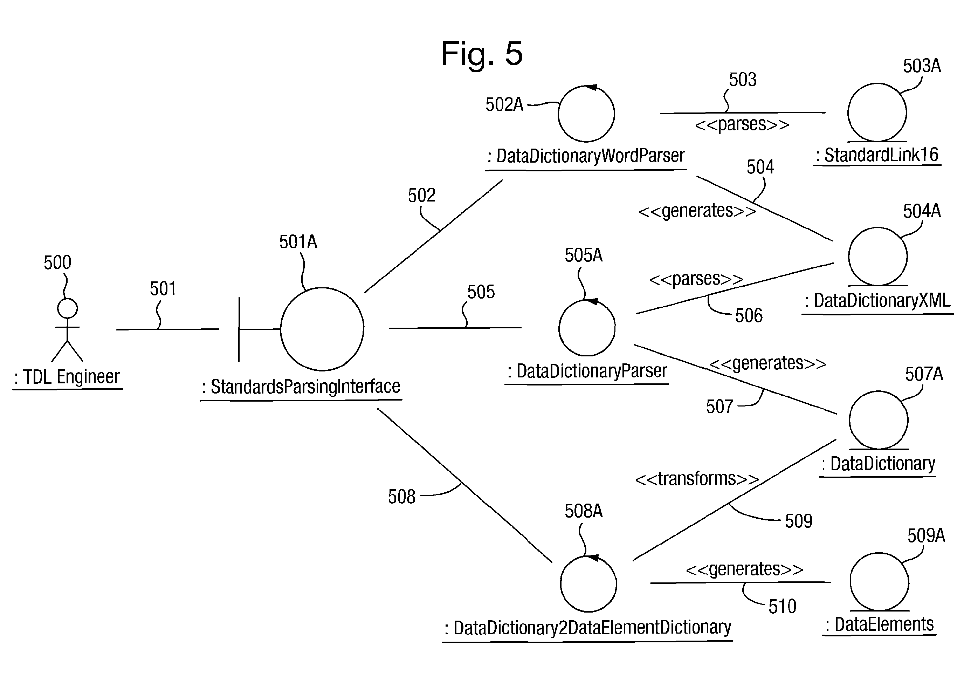

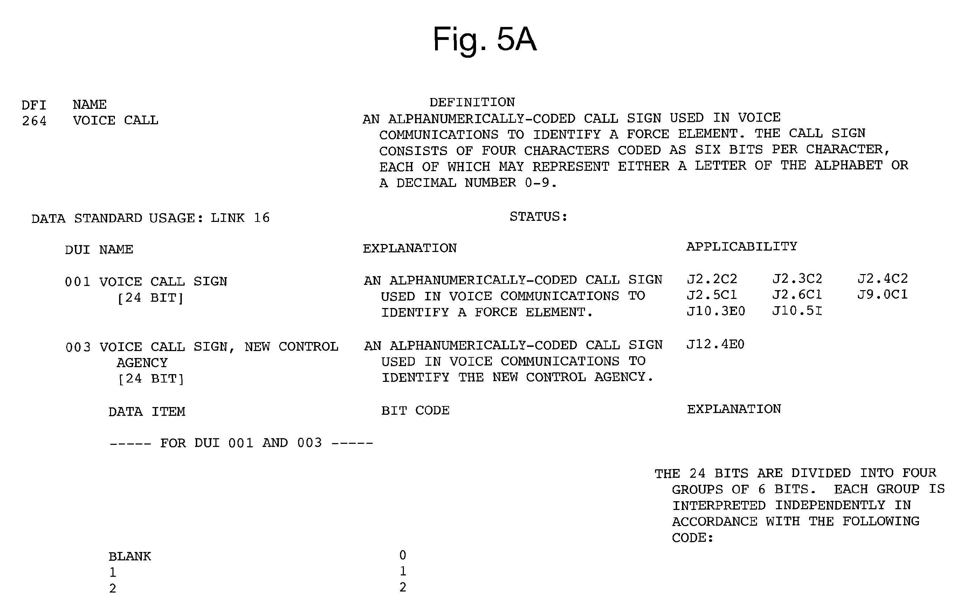

The population of the Standards and PlatformSpecifications models is illustrated in the UML-type collaboration diagrams of Figures 5 - 8.

Referring to Figure 5, the TDL Engineer 500 creates 501 the Data Elements Model components via a Link 16 Standard parsing user interface 501A. For example, the DFI/DUI definition of Figure 5A is parsed into the XML representation below:

```
 <DataDictionary source="DfiDuiDictionary"
  xmlns:xsi=http://www.w3.org/2001/XMLSchema-instance
  xsi:noNamespaceSchemaLocation="../Schemas/DataDictionarySchema.xsd">
       <DFI number="264">
             <Name>VOICE CALL</Name>
             <Definition>
             AN ALPHANUMERICALLY-CODED CALL SIGN USED IN VOICE
             COMMUNICATIONS TO IDENTIFY A FORCE ELEMENT. THE CALL SIGN
             CONSISTS OF FOUR CHARACTERS CODED AS SIX BITS PER CHARACTER,
             EACH OF WHICH MAY REPRESENT EITHER A LETTER OF THE ALPHABET
             OR A DECIMAL NUMBER 0-9.
             </Definition>
             <DUI id="264/001" number="001" subDUI="" refPoint="">
                    <Size>24 BIT</Size>
                    <Name>VOICE CALL SIGN</Name>
                    <Explanation>
                    AN ALPHANUMERICALLY-CODED CALL SIGN USED IN VOICE
                    COMMUNICATIONS TO IDENTIFY A FORCE ELEMENT.
                    </Explanation>
                    <DI bitCode="0">
                           <Name>BLANK</Name>
                           <Explanation/>
                    </DI>
                    Etc.
             </DUI>
       </DFI>
       </DataDictionary>
```

This allows the user to identify the relevant source data set to be used. A Data Dictionary Word Parser 502A parses 503 the component of the Link 16 TDL Standard 503A containing the Data Dictionary definition (this is in Appendix B of the standard referenced above) from the relevant MS Word document containing the part of the standard and generates 504 an equivalent document in XML 504A (a set of XML documents can be generated).

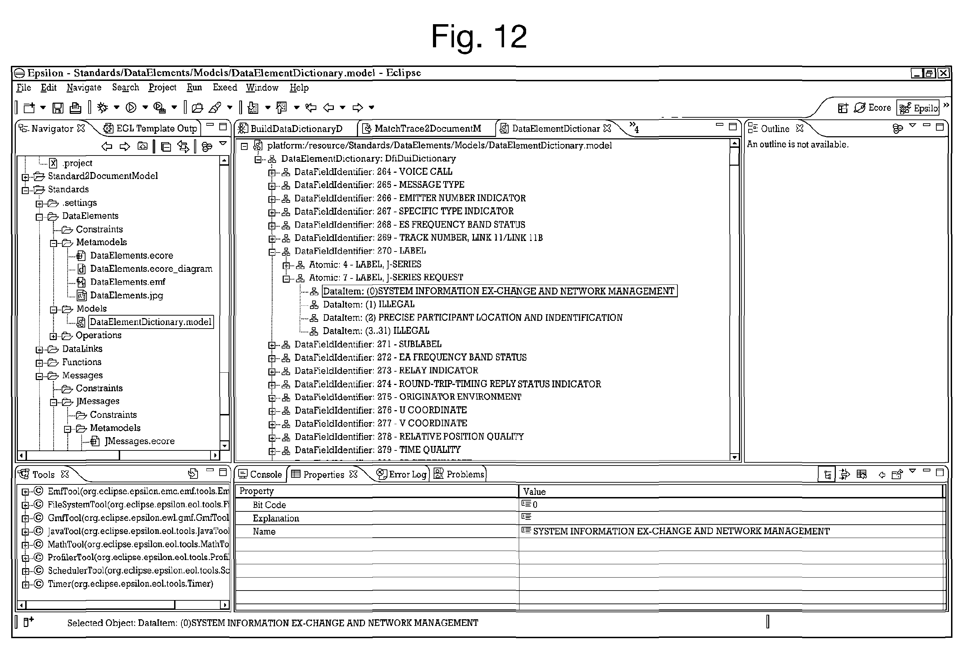

The XML document component of the Link 16 TDL Standard 504A is then parsed 506 and a model of the XML document 504A containing the relevant items of the Data Dictionary is generated 507. A Data Dictionary Parser 505A (an auto-generated component within the EMF see, for example, Stienberg, D., Budinsky, F., Paternostro, M., Merks, E., 'EMF - Eclipse Modeling Framework', 2nd ed., Addison-Wesley, 2008) parses each Data Dictionary XML document 504A against the relevant XML document schema and populates the Data Dictionary Ecore model 507A. The Data Dictionary Parser 505A parses 506 the specified Data Dictionary XML document 504A. The Data Dictionary Parser generates 507 an Ecore model for the specified XML source document. The Data Dictionary to Data Element model transformation 508A transforms 509 and merges each Data Dictionary Ecore model 507A into a single Data Elements Ecore model 509A. The Data Dictionary model is transformed into a Data Elements model and a single Data Elements Ecore model 510A is generated 510 (see Figure 12 for an example).

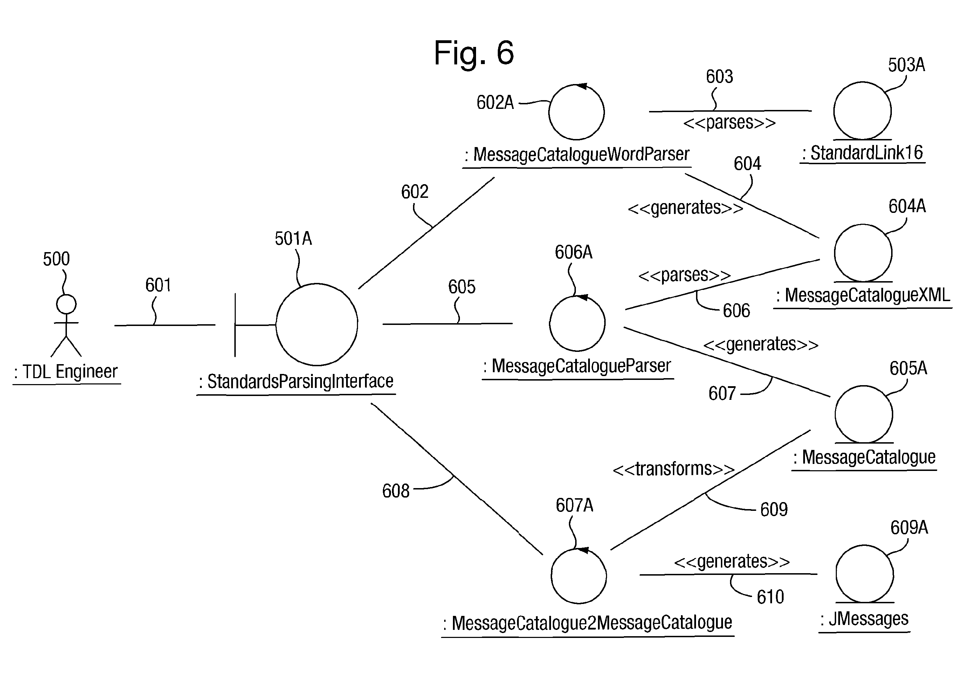

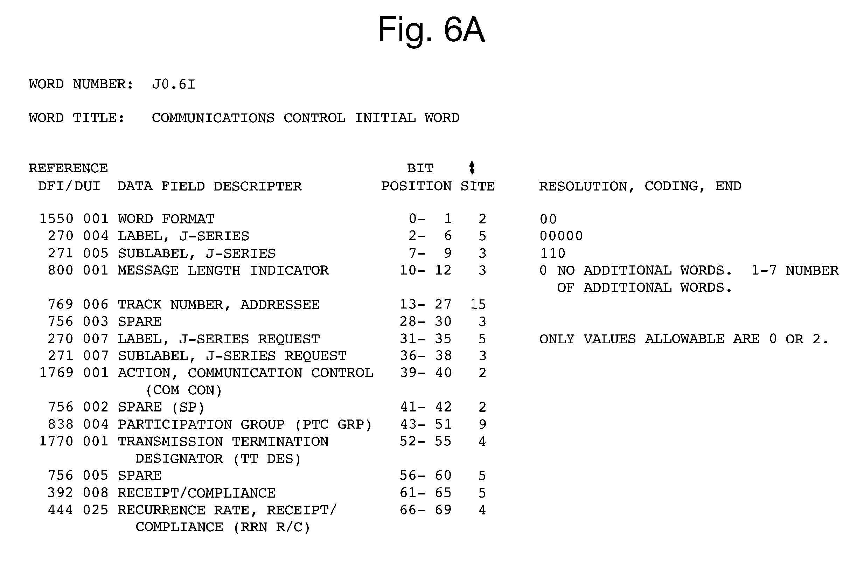

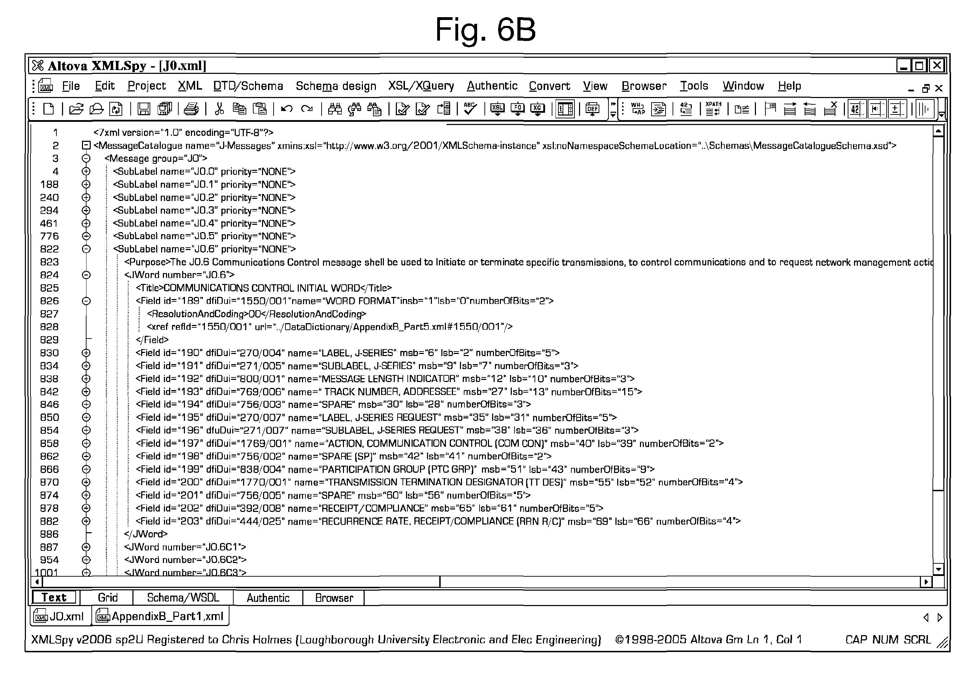

Figure 6 is a collaboration diagram illustrating creation of a J-Messages model. The TDL Engineer 500 creates 501, 502 the J-Message Model components via the Link 16 Standard parsing user interface 501. This allows the user to identify the relevant source data set to be used. A Message Catalogue Word Parser 602A parses 603 the component of the Link 16 TDL Standard 503A containing the Message Catalogue definition (this is in Section 5, Parts 1 to 3 of the standard document referenced above) from the relevant MS Word™ document and generates 604 an equivalent document in XML (a set of XML documents are generated). For example, the J-Word J0.6I definition of Figure 6A is parsed into the XML representation of Figure 6B:

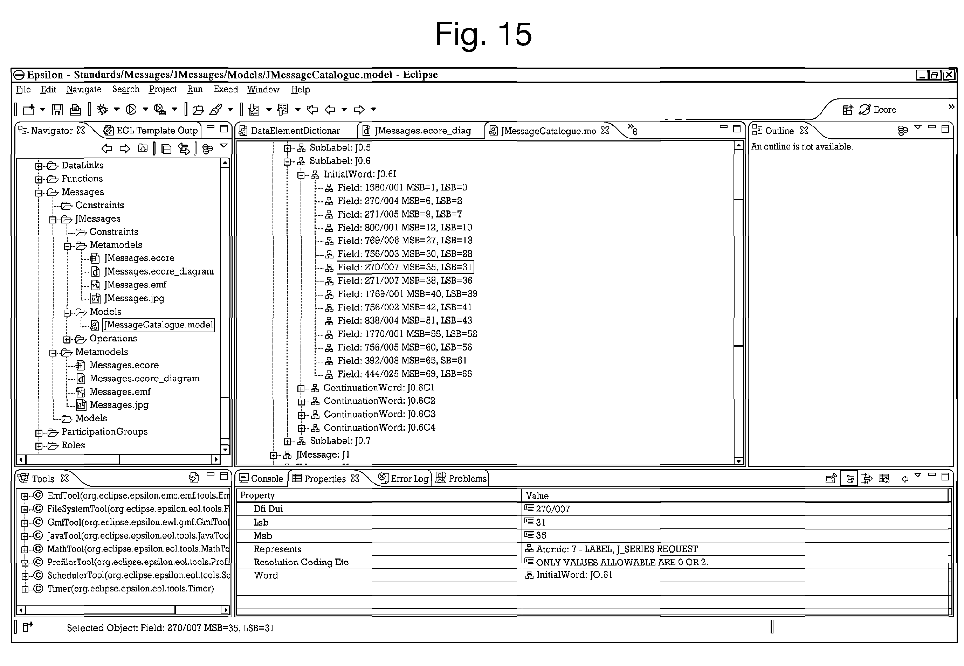

The MS Word document component of the Link 16 TDL Standard is parsed and an XML document 604A containing the relevant items of the Message Catalogue is generated. A Message Catalogue Parser 606A (an auto-generated component within the EMF see, for example, Stienberg, D., Budinsky, F., Paternostro, M., Merks, E., 'EMF - Eclipse Modeling Framework', 2nd ed., Addison-Wesley, 2008) parses each Message Catalogue XML document 604A against the relevant XML document schema and populates the Message Catalogue Ecore model 606A. The Message Catalogue Parser 606A parses the specified Message Catalogue XML document 604A. The Message Catalogue Parser generates 607 an Ecore model 605A for the specified XML source document. The Message Catalogue to Message Catalogue model transformation 607A transforms 609 and merges each Message Catalogue Ecore model into a single J-Message Ecore model and binds each message field to the relevant Data Element (DFI/DUI) definition. The Message Catalogue model is transformed into a J-Message model 609A. A single J-Message Ecore model is generated 610 (see Figure 15) and bound to the supporting Data Elements model 510A.

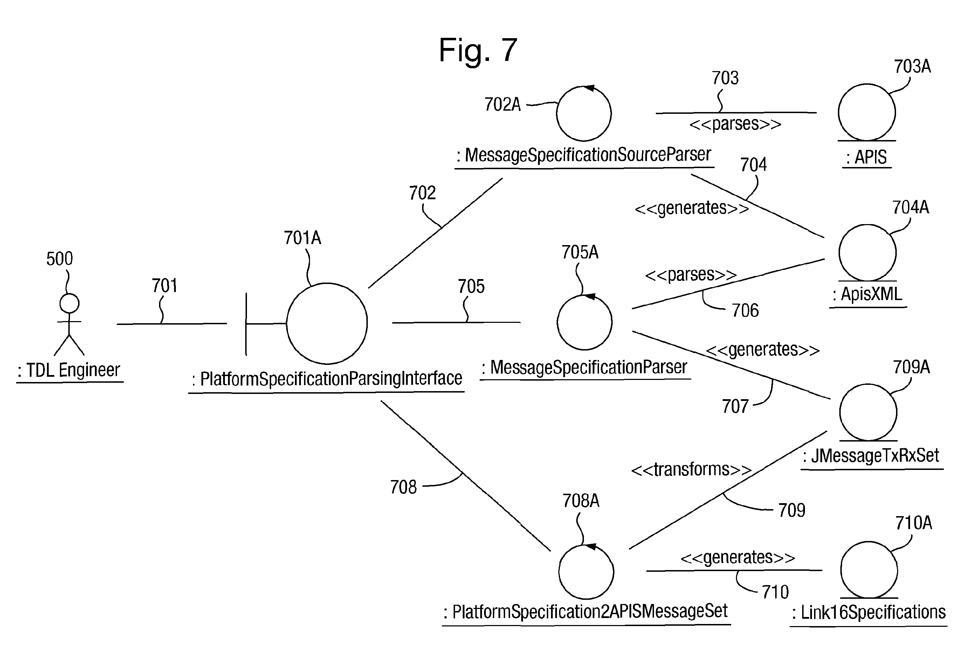

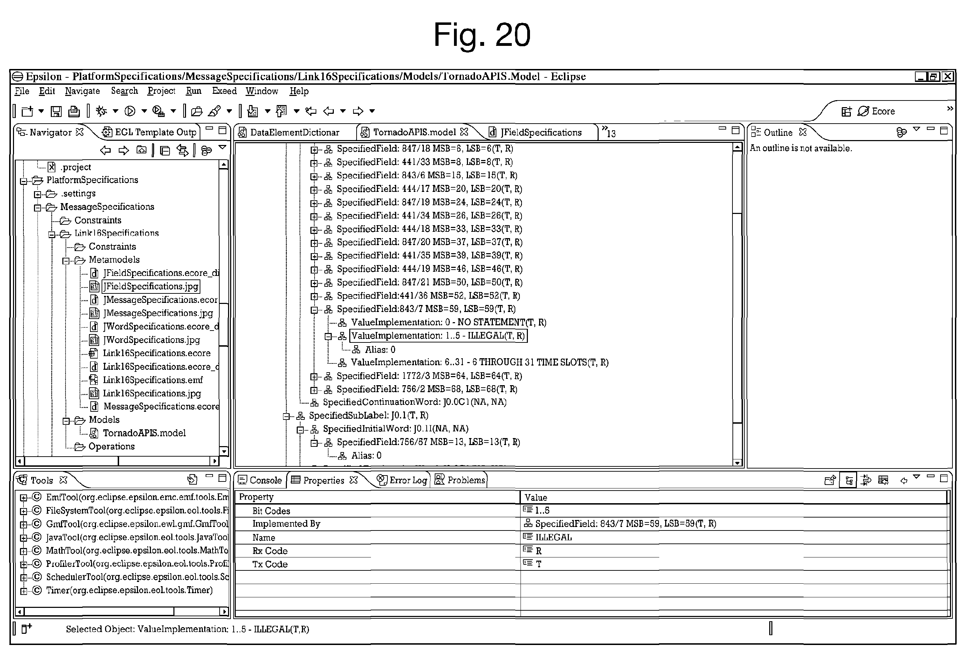

Figure 7 is a collaboration diagram illustrating creation of a Link 16 platform specification model. The TDL Engineer 500 creates 701, 702 the Link 16 Specifications Model components via a Platform Specification parsing user interface 701A. This allows the user to identify the relevant source data set to be used. In some cases a Message Specification Source Parser 702A may parses 703 the component of the platform specification 703A containing the Message Catalogue transmit and receive characteristics (this is generally provided in a project-specific format and a bespoke parser is required for each format, MS Word™, Excel™, and DOORS are commonly used) and a set of XML documents are generated. The Message Catalogue component of the APIS is parsed 703. An XML document 704A containing the relevant items of the APIS Message Catalogue is generated 704. A Message Specification Parser 705A (an auto-generated component within the EMF) parses each APIS Message Catalogue XML document 704a against the relevant XML document schema and populates 707 the J-Message Tx/Rx Set Ecore model 707A. The Message Specification Parser parses the specified Message Catalogue XML document. The Message Specification Parser generates an Ecore model for the specified XML source document. The Platform Specification to APIS Message Set model transformation 708A transforms and merges each J-Message Tx/Rx Set Ecore model into a single Link 16 Specifications Ecore model 709a (see Figure 20) and binds each message field to the relevant Data Element (DFI/DUI) definition. The J-Message Tx/Rx Set model is transformed 709 into a Link 16 Specifications model. A single Link 16 Specifications 710A Ecore model is generated 710 and bound to the supporting Data Elements model. Any housekeeping fields omitted from the APIS are copied from the base standard and have default transmit/receive characteristics applied (this is performed because some projects suppress such fields as they perceive their use as implicit).

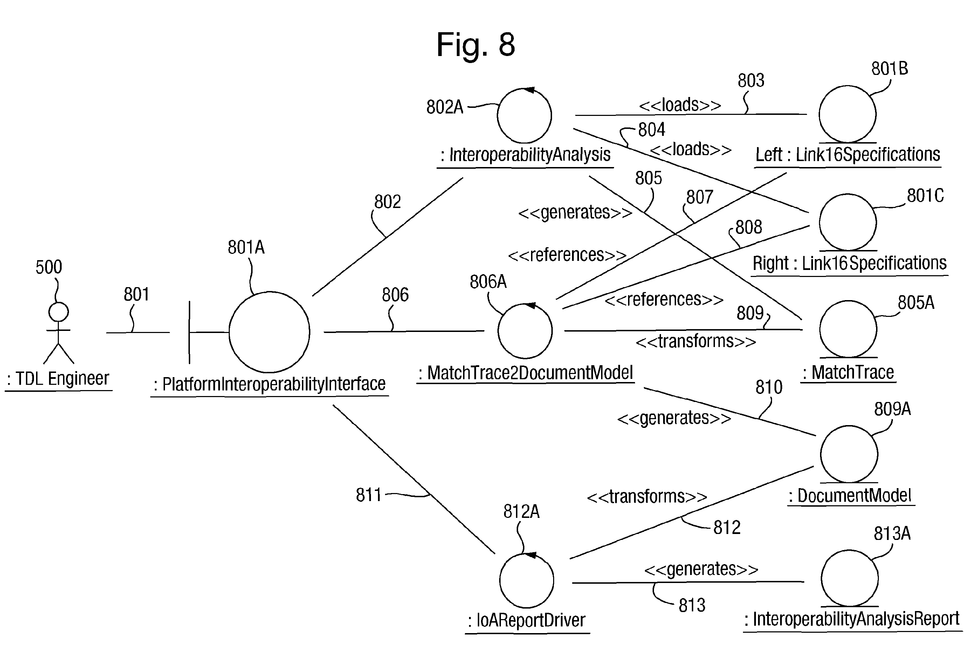

Figure 8 is a collaboration diagram illustrating creation of a message interoperability report. The TDL Engineer 500 creates 801 the Interoperability Analysis Report document via the Platform Interoperability user interface 801A. This allows the user to identify the relevant platforms to be compared (it is possible to either compare a Left platform against a Right platform, or compare a platform against itself (own-ship interoperability)). The Interoperability Analysis loads 803, 804 the Link 16 Specification models 801B, 801C for each of the platforms to be compared. The Interoperability Analysis comparison component 802A has a user-definable definition of what constitutes interoperability at the field (DFI/DUI) and DI level. The component generates 805 a Match Trace component 805A capturing the results of the comparison of the transmit characteristics of the Left model against the receive characteristics of the Right model. The Left Link 16 Specification model is loaded 803 and the Right Link 16 Specification model is loaded 804. A Match Trace object 805A is generated 805 containing the result of the Tx/Rx comparison of each field defined in the Left and Right models. The Match Trace to Document Model component 806A transforms 809 the Match Trace object into an instance of the Document Model 809A, the Match Trace to Document Model transformation makes reference to the source Left and Right Link 16 Specification Models in order to capture the necessary details of each Tx/Rx comparison result. The model transformation references the Left model to extract the necessary transmit characteristics of the platform. The model transformation references the Right model to extract the necessary receive characteristics of the platform. The Left model (transmitting platform) is traversed and the results of the comparison in the Match Trace transformed into the relevant components of the Document Model. An instance of the Document Model is generated 810 (this relates to the generic structure of a document, sections, subsections, tables, etc. rather than a rendering in a particular technology). An IoA Report Driver 812A traverses the Document Model instance and transforms 812 it into an HTML report of the results of the interoperability analysis (i.e. the Document Model is rendered in a particular technology, other technologies such as MS Word™, Excel™ could be supported). The Document Model is traversed and transformed 813 into a rendered instance of an interoperability analysis report 813A. The Interoperability Analysis Report is rendered (e.g. in HTML).

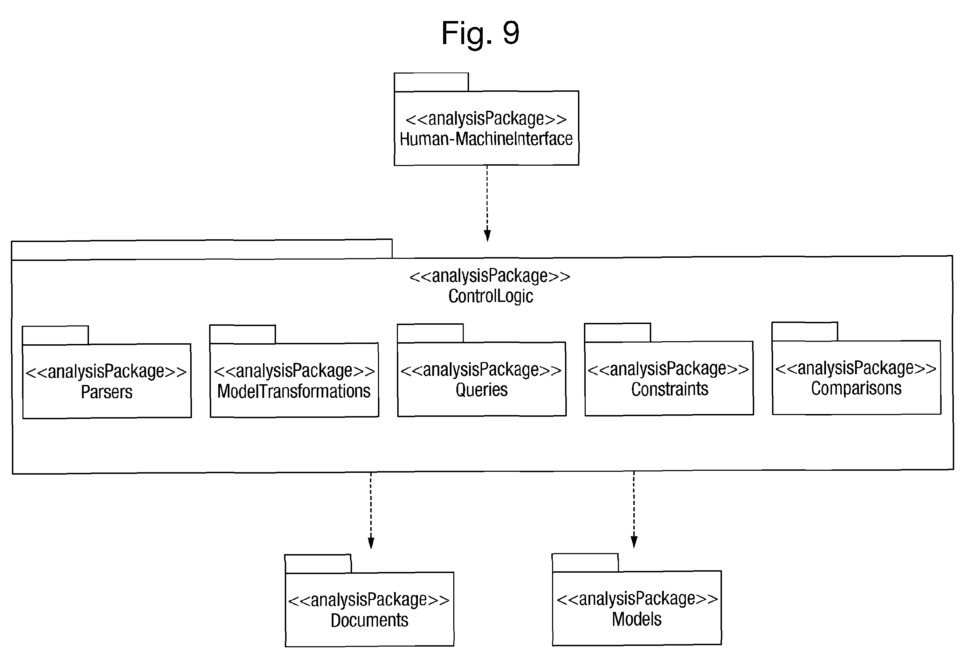

Having identified the relevant analysis classes (stereotyped as boundary, control and entity), it is possible to define an abstract system architecture and place each of the analysis classes in an analysis subsystem; a simple three-layer architecture can be adopted in this case (see Figure 9).

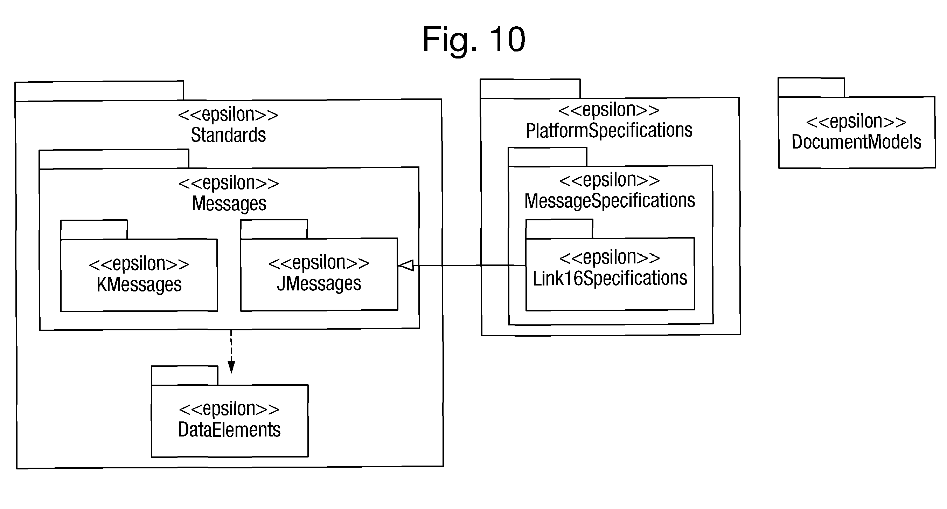

The ability to perform interoperability analysis via an automated tool is facilitated by the detailed modelling of the necessary domain concepts and this can be achieved via an analysis of the source documentation, i.e. the base standard document referenced above and the project-specific APIS material, which is often provided via different tools (DOORS, MS Word™, MS Excel™, etc.) and in differing formats. The various formats, whilst different, relate to a common underpinning (and implicit) model. Relevant domain models are illustrated in Figure 10.

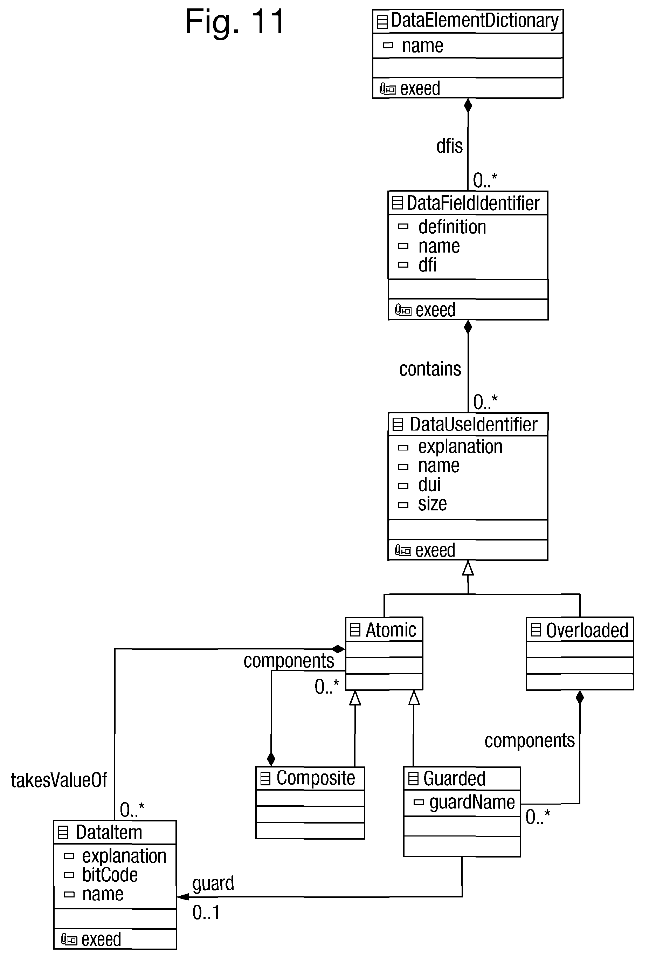

Each data element in the Data Elements Model is defined by the standard in the form of a DFI/DUI (Data Field Identifier / Data Use Identifier). The DFI provides the concept of a data type family (e.g. Label), whilst the DUI proves a refinement of this concept (e.g. Label, J-Series Request), both the DFI and DUI are identified by numeric codes, e.g. Voice Call sign is identified by the DFI/DUI 270/007. Furthermore, the standard defines the size of each DFI/DUI, the resolution and/or enumerated values are also defined via the notion of Data Items (DIs). There is some additional complexity applied to certain DFI/DUIs via the notion of overloading, such that the same DFI/DUI may relate to different definitions depending upon the context (which is provided by the value of another DFI/DUI, and the composition of some DFI/DUIs from a collection of definitions (where the same DI definitions are shared by multiple DFI/DUIs). Finally, the collection of Data Element objects is contained in a dictionary. The DataElements domain model captures the above semantics (see Figure 11).

The parsers and transformations discussed above allow the Data Elements model to be populated with data extracted directly from the Link 16 Standard reference above. Figure 12 shows a screenshot of the resulting model instance browsing DFI/DUI 270/007.

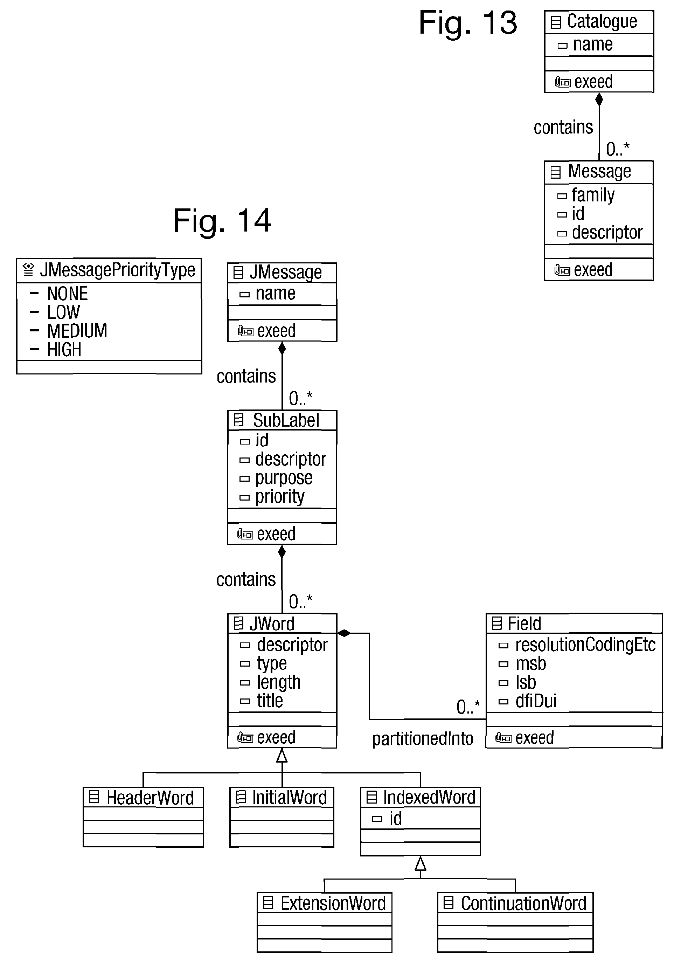

J-Messages in the J-Messages Model are exchanged between cooperating Link 16 platforms. The messages are arranged in functionally-oriented groups. J-Messages comprise a varying number of J-Words of fixed size (70 bits). J-Words are of various types (Initial, Extension, Continuation), and each J-Word comprises a number of fields, each of which is drawn from the underlying dictionary of Data Elements (which defines the relevant characteristics such as the size in bits). Some of the modelling concepts described herein will be common to other forms of TDL, hence a root package Messages has been defined to contain all common concepts. In some embodiments this contains only the class Catalogue (the class responsible for holding the collection of messages), and the abstract class Message that is to be specialised for each type of TDL message (see Figure 13).

The Message concept is specialised by the class JMessage in the package JMessages to represent the root of the domain of J-Messages. Each J-Message (e.g. J0) is defined by a number of functionally-oriented sub-labels (e.g. J0.0, J0.1, etc.), each of which contains a number of J-Words. The concept of a J-Word can be represented via the abstract class JWord and this can be specialised to represent each of the concrete J-Word types. Each J-Word is partitioned into a number of fields defining the link to the relevant DFI/DUI and the location in the 70 bit J-Word at which the DFI/DUI is to be located; hence the class Field provides linkage to the underlying Data Elements model. The structure of the J-Message model is shown in Figure 14. The parser and transformation described above allow the J-Messages model to be populated with data extracted directly from the Link 16 Standard document referenced above. Figure 15 shows a screenshot of the resulting model instance browsing a field of type DFI/DUI 270/007 within the Initial Word J0.6I.

The capture of the Data Elements and Message Catalogue for the Link 16 from the base standard has been described above. The base standard and, hence, the populated models, define the fully enumerated space of messages and data types permitted. In practice, however, a platform is likely to be required to implement only a subset of the base standard; furthermore, each platform must make some statement on the implementation provided - this is described in a platform-specific implementation specification, often referred to as the APIS. The section of the APIS relating to the message catalogue defines the messages, words and fields that are to be implemented and also defines the transmit/receive characteristics. For instance: field x may be transmitted; field x will not be transmitted; field x may be received; field x will not be received; the receipt of field x with a value y will be interpreted as if it had been received with a value z

The Tx/Rx characteristics are declared hierarchically in relation to the Field, from the message Sub-Label to the J-Word, to the Field. This represents an extension to the domain model described below.

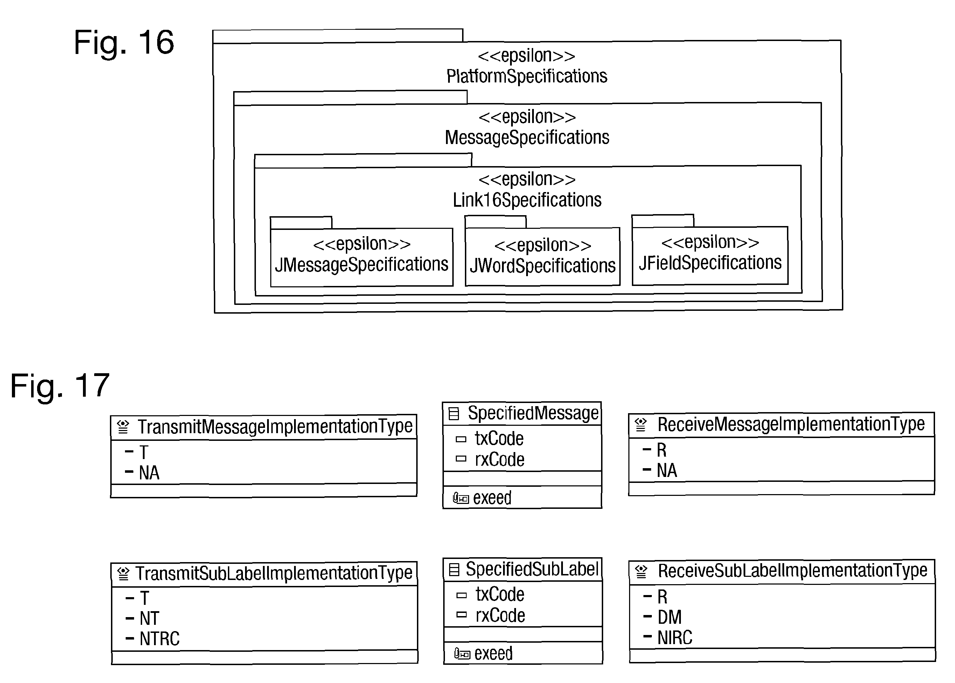

The Platform Specifications model can be structured in the form of a number of nested packages as illustrated in Figure 16. The package structure reflects the anticipation of a future requirement to support other aspects of a platform specification (APIS) in a model-based form beyond that of the message set and the Link 16 technology. The partitioning of the specification components for J-Messages, J-Words, and J-Fields is simply to avoid a cluttered model.

The Message Specifications namespace provides a home for the concept of a Specification, the Specification identifies the source file from which it is populated (the relevant APIS document) and also references the base standard (from which the APIS has been derived).

The Link 16 Specifications Model provides a point of future extension to support various aspects relevant to Link 16 Specifications (APIS models) and interoperability; current embodiments support the specification of components related to the implementation of a message catalogue via the packages JMessageSpecifications, JWordSpecifications, JField Specifications.

The J-Message Specifications model extends the J-Message and SubLabel concepts introduced by the modelling of the base standard and described below and identifies the relevant transmit/receive characteristics (see Figure 17).

The J-Word Specifications model extends the J-Word concept introduced below via the SpecifiedWord class. We also extend each of the concrete J-Word types via the classes SpecifiedInitialWord, SpecifiedExtensionWord and SpecifiedContinuationWord; this allows the concrete classes to inherit both the attributes of the concrete J-Word classes and also inherit the transmit/receive attributes from the SpecifiedWordclass.

The J-Field Specifications model extends the Field concept introduced below with the class SpecifiedField and introduces the transmit/receive characteristics relevant to fields within J-Words. A complexity introduced by the APIS is the requirement to be able to model the aliasing of values (DIs) supported by fields (DFI/DUIs) via alternative values (e.g. a platform's APIS may state that whist it receives the field DFI/DUI 270/007 with the value (DI) equal to 2 it will behave as if it had received the filed with the value of 1. Similarly, a platform's APIS may make a similar statement with regard to values (DIs) transmitted. Hence, the concepts Alias and Valuelmplementation with the necessary transmit/receive characteristics are introduced.

Embodiments therefore include the parsers and models that provide the capability to capture the components of a platform APIS relating to the message catalogue and are able to link this to the base standard. Figure 20 provides an illustration of a fragment of an APIS captured from an air platform. In this screenshot it can be seen that field DFI/DUI 843/007 in J-Word J0.0E0 has been declared as transmitting and receiving DI values 1..5 (Illegal) as DI value 0 (No Statement), modelled via an alias element. Also illustrated is the constraining of the field DFI/DUI 756/057 in J-Word J0.1I to the alias value 0; the transmit/receive characteristics of the latter field imply that the field will be set to zero in any transmission of this J-Word, and that it's value will not be processed in any reception of this J-Word.

The fields that comprise each J-Word relate primarily to tactical data; however, some fields are used for "housekeeping", such as identifying the J-Word type and index. There is some variability in the style with which such fields are captured by various projects, some projects identify all implemented fields in the APIS, other treat such "housekeeping" fields as implicit (since the terminal wouldn't operate without them). In order to avoid the identification of false interoperability issues if we find that such "housekeeping" fields have been omitted we extract the relevant data from the base standard to provide a fully enumerated APIS.

After modelling and capturing the message components of a platform's APIS and providing linkage back to the base standard, the next step is to use these instantiated models to perform a mechanistic interoperability analysis. It should be noted that, prior to the deployment of this tool, the task was undertaken manually and could take a significant period of time to complete, such is the volume of data that must be assessed; the tool is able to perform this activity in a matter of minutes. The interoperability analysis activity is performed by selecting the APIS models of the transmitting and receiving platforms; this could be two different platforms or the same platform, the latter case would be adopted to perform "own-ship" interoperability analysis (e.g. to establish the interoperability of two platforms of the same type). Having identified the transmitting and receiving platforms the message structures are traversed and the transmit characteristics of one model instance are compared against the receive characteristics of the other model instance, in effect asking the question: Can platform A send data item X to platform B? This question can have a number of subtleties, since platform A may be capable of transmitting a data item that cannot be received by platform B, and platform B may be capable of receiving a data item that cannot be transmitted by platform A, platform A may be capable of transmitting a data item that platform B receives but interprets (aliases) as a different data item, finally platform A may be capable of transmitting a data item that platform B receives but does to process. Furthermore, it is prudent to define what is meant by "interoperable" in the context of two J-Messages, SubLabels, J-Words, and Fields.

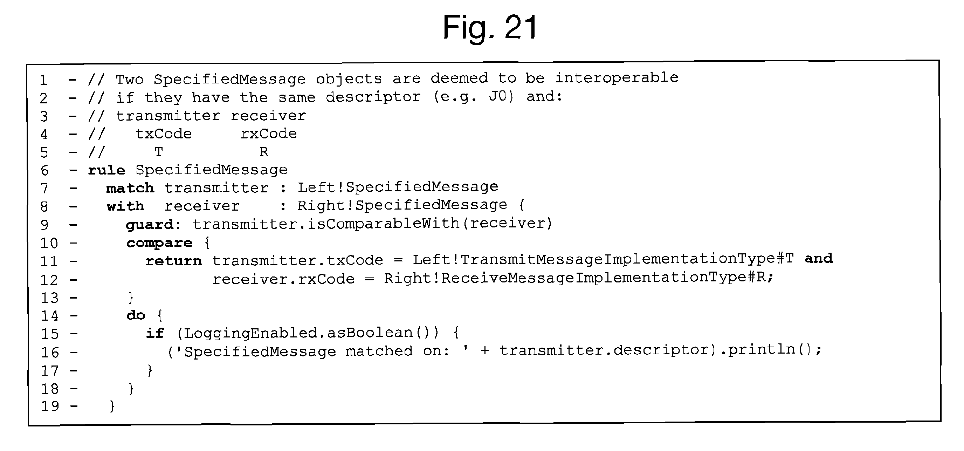

The interoperability analysis component can be implemented using both the XMF tool and also the Epsilon plugin for Eclipse; hence, the method is not dependant upon a specific technology. The examples herein are taken from the Epsilon-based implementation; however, the basic design is similar in both cases. The Epsilon plugin provides the Epsilon Comparison Language (ECL) to support the comparison of models in accordance with user-defined criteria. In the example of Figure 21 the comparison of two objects of type SpecifiedMessage (see Figure 17 for the definition of this class) is illustrated. In the example ECL performs a pattern match to identify instances of type SpecifiedMessage, one from the model Left (platform A), and one from the model Right (platform B) (lines 7 & 8), the guard condition (line 9) ensures that only instances of the same message number are compared, this test is implemented in the operation isComparable ( ) ,the isComparable ( ) operation is implemented for all object types to be compared, SpecifiedSubLabel, SpecifiedInitialWord, etc. Lines 10 to 13 perform the comparison, the result of which is stored in an ECL-specific construct called matchTrace.

There are two main points to note from the example ECL comparison rule illustrated by the code extract below. Firstly, the operation isComparable () is defined to identify when it makes sense to compare two objects of the same type (e.g. it would be meaningless to compare message J0.0I with message J0.0E0), and, secondly, what is meant by "interoperable" is defined in the body of the compare clause (lines 11 & 12). In this example, two messages of the same type are defined to be *interoperable* at the message level if the transmitting platform is able to transmit the message and the receiving platform is able to receive the same message, in the case of objects of type SpecifiedMessage this is indicated by the txCode of the transmitting platform's message being set to 'T' and the rxCode of the receiving platform's message being set to 'R' (see screenshot in Figure 20). When two messages are considered interoperable at the message level it means simply that one platform is able to transmit the message and the other is able to receive the same message. For a more detailed view, similar comparison rules support the interoperability analysis at the field and data item levels such that a message's interoperability can be resolved to the level of the values that may be transmitted and received within individual fields, and this can provide a view of message-level interoperability at the highest level of fidelity possible. The most significant differences between the comparison rules used to compare objects of the various types are the implementations of the isComparable ( ) operation and the actual definition of object interoperability. The Epsilon ECL engine differs from the XMF implementation insofar as it uses a simple pattern matching approach to identifying objects to be compared (it is not structurally-aware), hence it will try to match (e.g.) an instance of a SpecifiedMessage from the model of the transmitting platform's APIS against all instances of SpecifiedMessage from the model of the receiving platform's APIS, hence the iscomparable () operation must be provided to identify only those objects that should be compared, since there are multiple instances of the same DFI/DUI utilised in multiple messages we need to ensure that the iscomparable ( ) operation identifies the correct instances for comparison, this is achieved via navigation of the links (associations) from (e.g.) the DFI/DUI up to the owning J-Message, an example is illustrated using the operation iscomparable () on the class Specified Field in the extract below:

```
        1 - operation SpecifiedField
        2 - isComparableWith(other : SpecifiedField) : Boolean {
        3 - return self.dfi = other.dfi and
        4 - self.dui = other.dui and
        5 - self.msb = other.msb and
        6 - self.lsb = other.lsb and
        7 - self.word.isComparableWith(other.word);
        8 - }
```

The example above determines that two specifiedField objects are comparable if both the receiver (the object self) and other have the same value of dfi and dui (lines 3 & 4) and are located at the same position within the word (line 5 & 6), and both the owning word of the receiver and other are also comparable (line 7).

The definition of object interoperability can be captured in the compare clause of each comparison rule; the comparisons used are enumerated in the table below. However, it is important to note that these rules are flexible such that the definition of interoperability may be changed to meet users' requirements, e.g. two SpecifiedSubLabel objects may be required to declared interoperable if one platform is able to transmit (T) and the other is able to receive (R) or receives for receipt compliance but is not interpreted (NIRC).

| | Object | Transmitter | Receiver |
|---|---|---|---|
| 1. | SpecifiedMessage | T | R |
| 2. | SpecifiedSubLabel | T | R |
| 3. | SpecifiedInitialWord | NA | NA |
| 4. | SpecifiedExtensionWord | NA | NA |
| 5. | SpecifiedContinuationWord | NA | NA |
| 6. | SpecifiedField | T | R |
| 7. | ValueImplementation | T | R |

The result of running the ECL comparison script is a matchTrace object containing the result of each comparison clause executed. The matchTrace object may then be used in conjunction with each of the platform APIS models to generate a results document using a model transformation script; Epsilon provides the Epsilon Transformation Language (ETL); however, there are a number of alternative technologies available (e.g. XMF provides XMap).

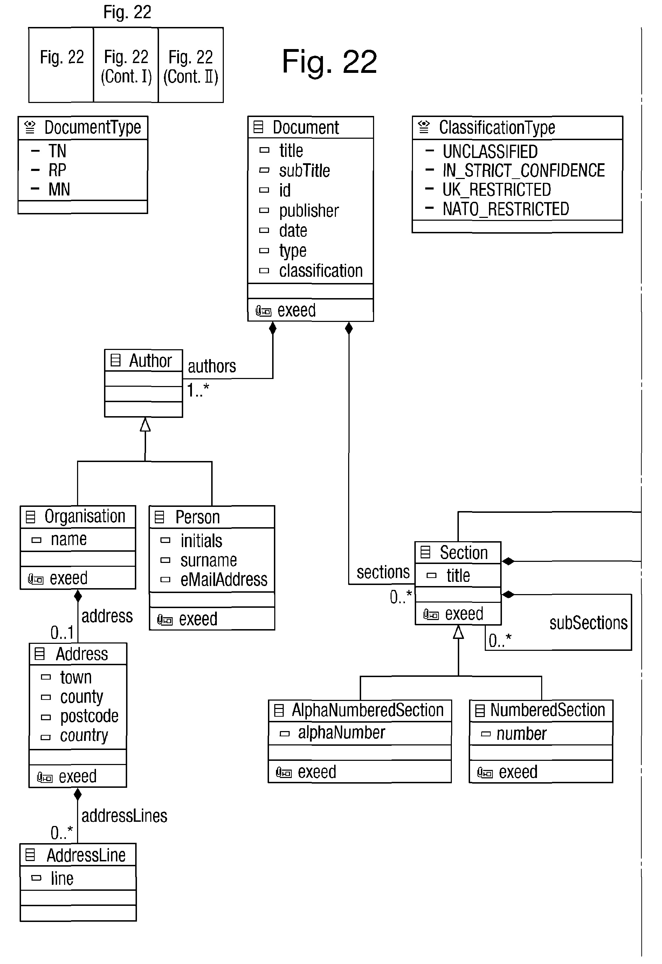

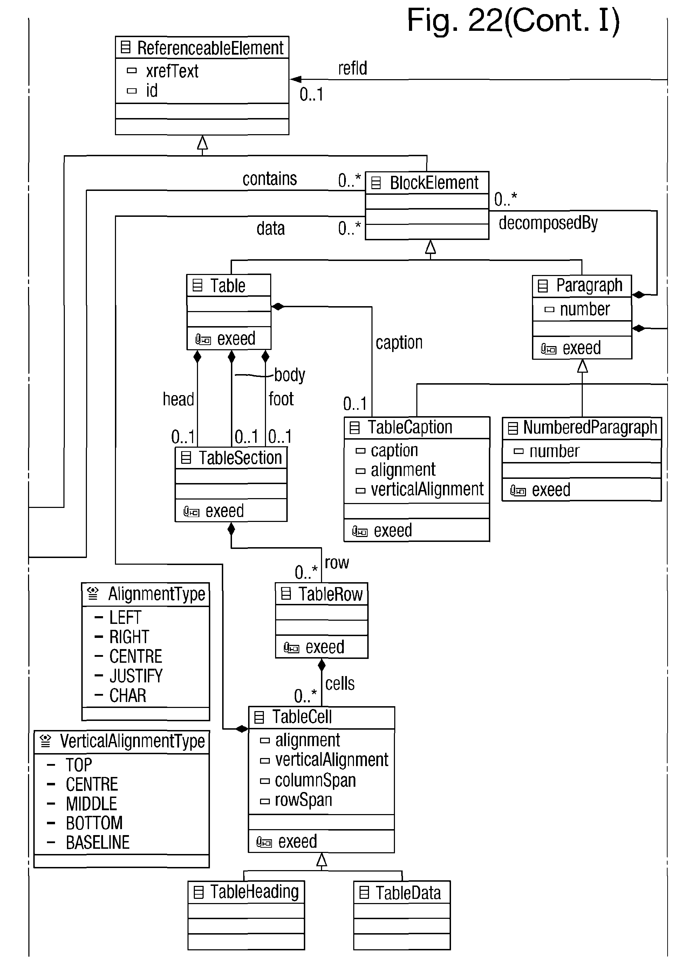

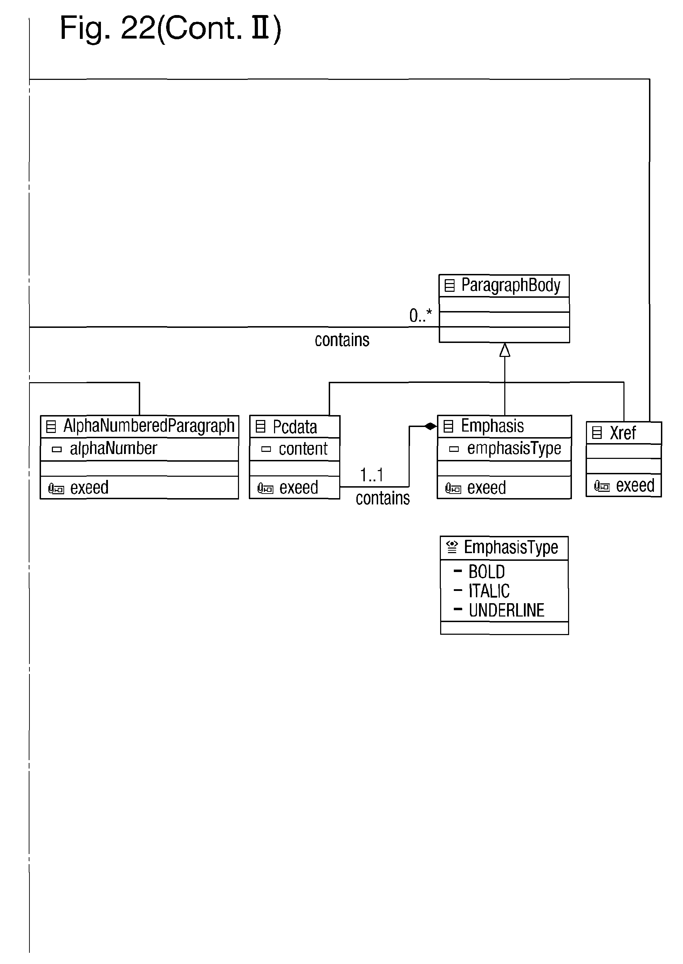

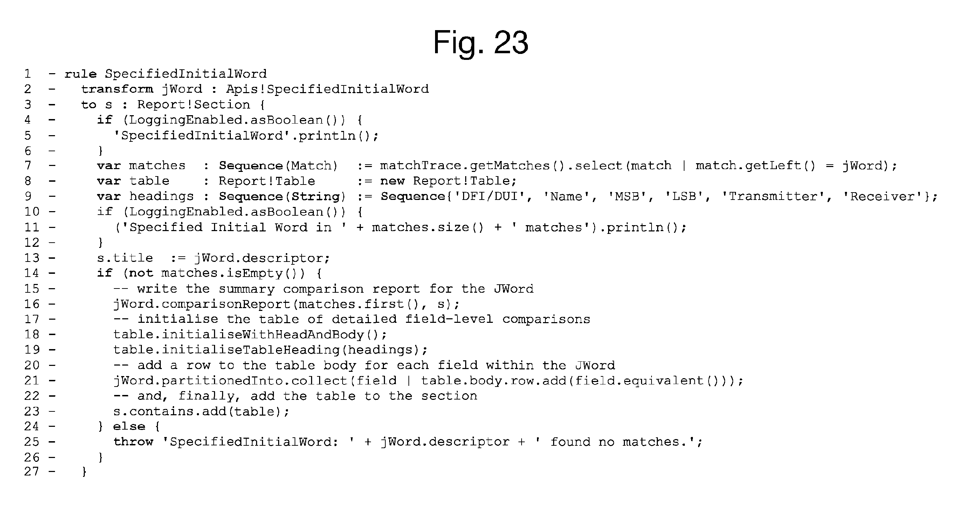

The ETL script traverses the transmit model, each node is then used to lookup its comparison result in the matchTrace object and, following the model-based approach, generates a result document component such that the result of the transformation is an instance of a Document Model (see Figure 22). The Document Model is not specific to the reporting of the IoA results but is, rather, a generic document model that could be used to represent many document structures. Figure 23 provides an illustration of the matchTrace to Document Model transformation, in this example the transformation creates a Table element within which to hold the results of the Tx to Rx comparison.

It is possible that one platform may define transmit or receive characteristics for some item (message, sub-label, word, field, etc.) whilst the other platform may make no statement at all, once again this will need to identified as an interoperability issue. The XMF-based implementation addressees this issue via a single-pass platform 1 Tx versus platform 2 Rx and platform 2 Tx versus platform 1 Rx comparison engine, whilst in the case of the Epsilon ECL/ETL-based approach this needs to be implemented in the ETL script; in the case of the Epsilon implementation we perform the platform 1 Tx versus platform 2 Rx comparison and then explicitly reverse the platforms to perform the corresponding platform 2 Tx versus platform 1 Rx comparison, although the two implementations differ the end result is the same.

The output of the interoperability comparison can comprise a document, in the case of the Epsilon-based embodiment it is an instance of the Document Model, whilst in the case of the XMF-based embodiment it is an XML document. The next step is to render the results document into a human readable report.

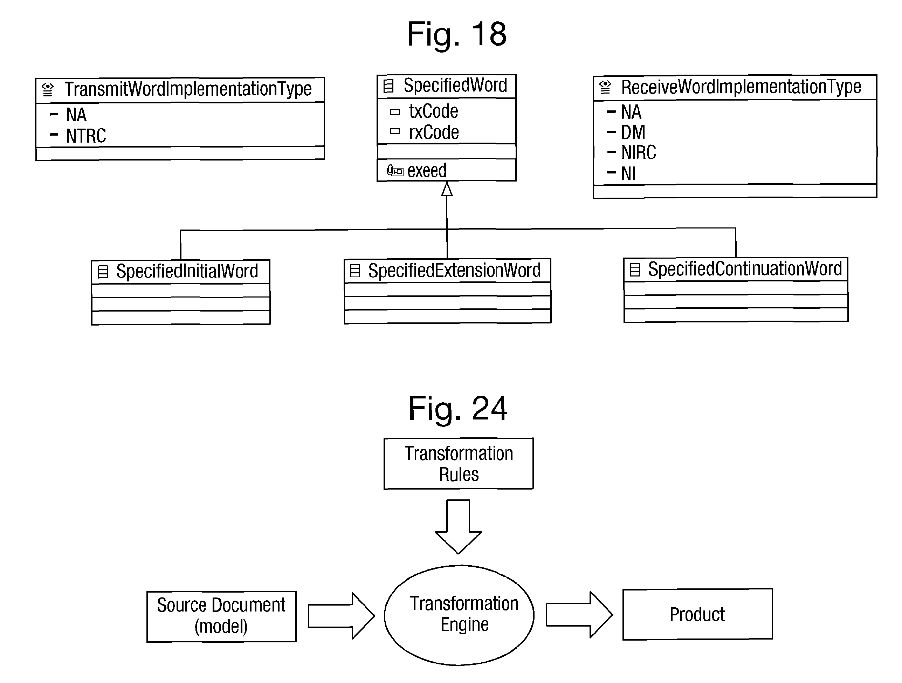

An interoperability analysis document can be generated in the form of an XML document (XMF-based embodiment), or as an instance of a Document Model (Epsilon-based embodiment). Different technologies can be used to render these in human readable forms; in the case of the XML document it can be rendered in HTML via XSLT, in the case of the Document Model instance it can be rendered in HTML via the Epsilon Generation Language (EGL) - both approaches are transformational, corresponding to the model illustrated in Figure 24.

Both XSLT and EGL can be used as template transformational languages, i.e. to specify a template document rendering for some component and then have the transformation engine populate the template with data from the source document. A simple example document transformation taken from one of the EGL templates is illustrated below:

```
 1 - [% if (a.isKindOf(Person)) { %]
 2 - <address>
 3 - <a
 href="mailto:[%=a.eMailAddress%]">[%=a.initials%][%=a.surname%]</a><br
 />
 4 - </address>
 5 - [%} else if (a.isKindOf(Organisation)){ %]
 6 - <address>
 7 - [%=a.name%]<br/>
 8 - [% for (address in a.address) { %]
 9 - [% for (1 if address.addressLines) { %]
 10 - [%=l.line%]<br/>
 11 - [% } %]
 12 - [%=address.town%]<br/>
 13 - [%=address.county%]<br/>
 14 - [%=address.postCode%]<br/>
 15 - [%=address.country%]<br/>
 16 - [% } %]
 17 - </address>
 18 - [% } else { %]
 19 - <h4>Anonymous</h4>
 20 - [% } %]
```

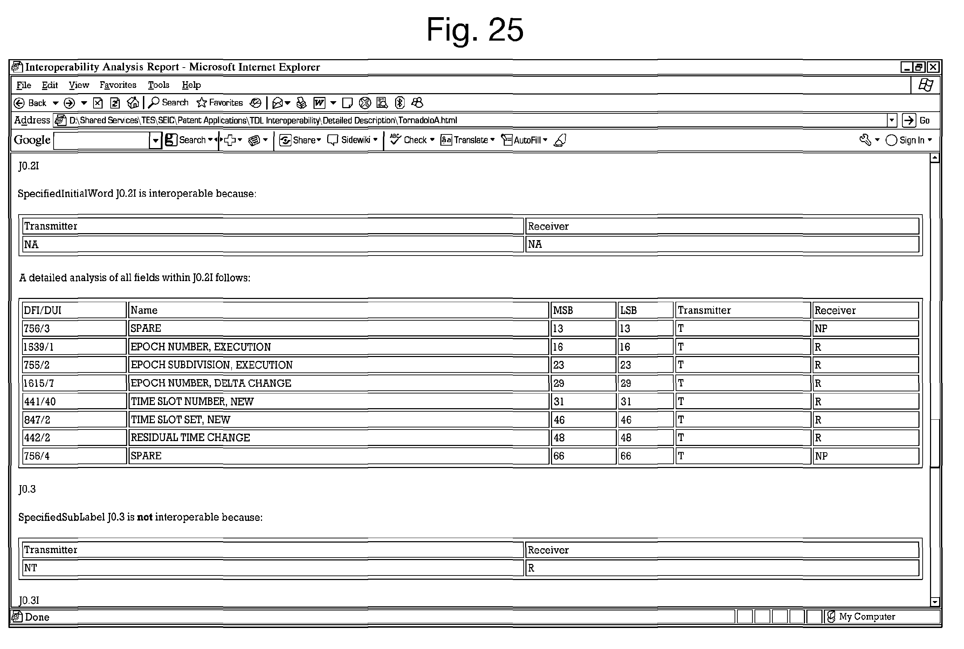

The example EGL script is one component in a number of scripts and relates to the generation of an address section for a rendering of the Document Model in HTML. The script provides two styles of address: the first at lines 2 to 4 renders an author's name and provides a link to their e-mail address; the second at lines 7 to 17 provides and organisation's address. The script contains template HTML structures, e.g. the <address> ... </address> tags, and populates these with data extracted from the document model, [%=a.eMailAddress%] extracts the value of the attribute eMailAddress from the Person object which is a subclass of Author (see Figure 22). An example of the rendered interoperability analysis report generated by EGL is shown in Figure 25; this report indicates that the J-Word J0.2I is interoperable because both Platform A and Platform B provide the same statement 'NA' (platform APIS documents don't always provide interoperability statements at the J-Word level, hence current embodiments declare this situation to be *interoperable*). Delving into the individual fields of word J0.2I, it can be found that it contains two issues, both DFI/DUI 756/003 and 756/004 are not interoperable because Platform A transmits the field but Platform B does not process it (since these DFI/DUIs relate to "spare" fields this situation would not be considered an interoperability issue for the platforms). The final table of the interoperability analysis report indicates that sub-label J0.3 is not interoperable because Platform A doesn't transmit is, but Platform B can receive it; this would prompt the TDL engineer to confirm whether or not this presented a problem.

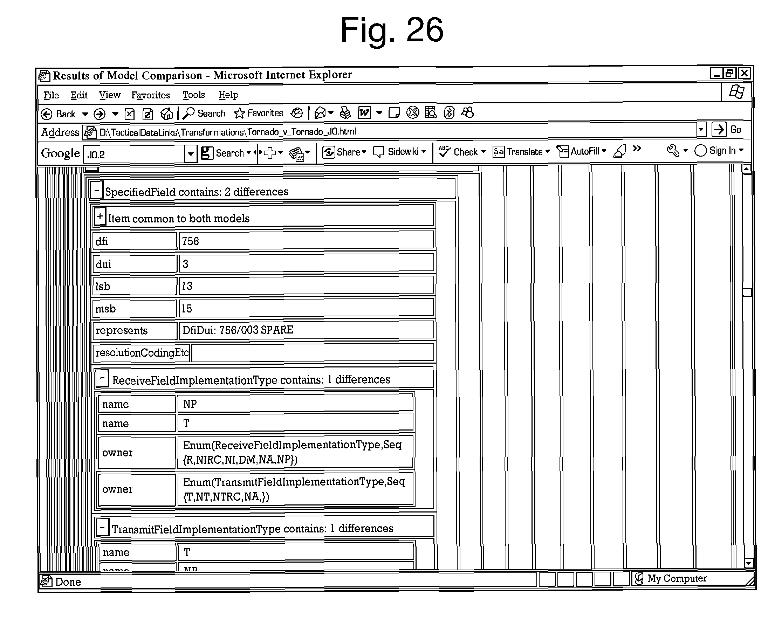

For completeness, Figure 26 provides a screenshot of the interoperability analysis report generated by the XMF-based implementation and rendered via XSLT into HTML. The document fragment indicates the incompatibility of Tx/Rx attributes relating to DFI/DUI 756/003 in J0.2I.

The embodiments described herein provide a model-based approach to a problem affecting a number of TDL programmes. A number of models have been developed from an analysis of the source material including the Link 16 standard and the project-specific APIS documents. A generalised metamodel describing the message catalogue entities relevant to the APIS has been designed such that each project could map its APIS message catalogue specifications into this common format by way of a project-specific parser (e.g. parsers operating on DOORS, MS Excel™ and MS Word™ based project documentation). A metamodel typically comprises a precise definition of the constructs and rules needed for creating semantic models. The metamodel can underpin the model by defining some domain of relevance and constraining the scope of those models that are declared valid within this domain. A metamodel may be used to attach semantics to a model, such that not only are the concepts to be modelled described, but also their meaning. The metamodels used in embodiments of the present system will normally be executable, such that models (instances of the metamodels) may be checked by a suitable tool for validity against the metamodel. A metamodel may be considered analogous to the schema used to define the structure of a database in terms of the entities and relations. Embodiments provide an interoperability analysis algorithm and illustrated examples operate via two distinct implementation technologies that support the automatic comparison of the message catalogue parts of the APIS for any two platforms, or two instances of the same platform for 'own-ship' analyses). The transformation and rendering of the interoperability analysis can result in a human-readable document.

The highly modular model-based approach of the embodiments described herein support extension and variation such that the characteristics of additional links, e.g. Variable Message Format (VMF), could be accommodated, as could output in differing formats, e.g. report generation into a DOORS formal module. Some embodiments of the method can determine interoperability of TDL-based characteristics other than messages, e.g. interoperability of the timeslots of the first and second platforms. In practice, the XMF-based version of the tool has been found to provide a significant productivity increase; reducing the time taken to perform an interoperability analysis from, in the region of, a number of man-months to a few minutes.

## Claims

1. A method, implemented in a computer system including a processor (121) and a memory (122), for assessing message interoperability between a first platform (102A) and a second platform (102B) communicating over a link (104), the method comprising the steps of:
obtaining (204) first platform model data representing platform-specific message transmit/receive information over the link for the first platform;
obtaining (204) second platform model data representing platform-specific message transmit/receive information over the link for the second platform, and
using (206) the first platform model data and the second platform model data to assess message interoperability between the first platform and the second platform; the method being **characterized in that** said link is a Tactical Data Link, TDL, and by comprising the steps of:
parsing, using said computer system, data derived from at least part of a standards document relating to the TDL to generate at least one model template based on to the TDL standards document;
parsing, using said computer system, Actual Platform Implementation Specification data associated with said first platform against said model template to generate said first platform model data;
parsing, using said computer system, Actual Platform Implementation Specification data associated with said second platform against said model template to generate said second platform model data; and
performing said assessment of message interoperability between the first platform and the second platform using a message interoperability assessment tool in the computer system configured to:
- analyse said first and second platform model data by comparing therein respective communication characteristics of said first and second platforms to determine whether said second platform is capable of receiving at least one message type sent by said first platform in order to determine the message interoperability, and
- output a report representative of said analysis.

2. A method according to claim 1, wherein:
the first platform model data specifies a set of message types, with at least some of the message types each having an associated Data Field Identifier, DFI / Data Use Identifier, DUI and zero or more associated Data Items, DIs;
the second platform model data specifies a set of message types, with at least some of the message types each having an associated Data Field Identifier, DFI / Data Use Identifier, DUI and zero or more Data Items, DIs, and
wherein the checking of whether the second platform is capable of receiving the message type sent by the first platform includes checking whether the associated DFI/DUI and DIs of a said message type have matching transmit/receive characteristics in the first and the second platform model data.

3. A method according to claim 1, wherein the model template comprises an executable model, e.g. an XMF or Eclipse Modelling Framework,EMF document.

4. A method according to any of claims 1 to 3, wherein the TDL standards document comprises a Link 16 Standard document.

5. A method according to any of claims 1 to 4, wherein message information in the model template is derived from at least part of a Data Dictionary portion of the standards document.

6. A method according to any of the preceding claims, wherein message information in the model template is derived from at least part of a Message Catalogue portion of the standards document.

7. A method according to claim 5 or 6, wherein message transmit/receive information in the first platform model data and the second platform model data is derived from a J-Message transmit/receive portion of the Actual Platform Implementation Specification.

8. A method according to claim 7, when dependent upon claim 2, wherein the message transmit/receive information is used to associate DFI and/or DUI data with a message type.

9. A computer system comprising a processor (121) and a memory (121) and including an interface for receiving Actual Platform Implementation Specification data associated with first and second platforms communicating over a link, and on which is loaded for execution a computer program configured to execute a method for assessing message interoperability between a first platform (102A) and a second platform (102B) communicating over a Tactical Data Link (104) comprising the steps of:
parsing data derived from at least part of a standards document relating to the Tactical Data Link to generate at least one model template based on to the TDL standards document;
parsing Actual Platform Implementation Specification data associated with said first platform against said model template to generate first platform model data;
parsing Actual Platform Implementation Specification data associated with said second platform against said model template to generate second platform model data; and
performing assessment of message interoperability between the first platform and the second platform by::
- analysing said first and second platform model data by comparing therein respective communication characteristics of said first and second platforms to determine whether said second platform is capable of receiving at least one message type sent by said first platform in order to determine the message interoperability, and
- outputting a report representative of said analysis.

10. A system according to claim 9, wherein the system is located onboard a platform (102) configured to communicate over the TDL (104).

11. A computer program element comprising: computer code means to make the computer execute a method according to any one of claims 1 to 8.

## Patentansprüche

1. Verfahren zum Bewerten einer Meldungsinteroperabilität zwischen einer ersten Plattform (102A) und einer zweiten Plattform (102B), die über einen Link (104) kommunizieren, das in einem Computersystem umgesetzt ist, das einen Prozessor (121) und einen Speicher (122) beinhaltet, wobei das Verfahren die Schritte umfasst:
Erhalten (204) von Modelldaten zur ersten Plattform, die plattformspezifische Meldungssende-/Meldungsempfangsinformationen darstellen, über den Link für die erste Plattform;
Erhalten (204) von Modelldaten zur zweiten Plattform, die plattformspezifische Meldungssende-/Meldungsempfangsinformationen darstellen, über den Link für die zweite Plattform; und
Verwenden (206) der Modelldaten zur ersten Plattform und der Modelldaten zur zweiten Plattform, um eine Meldungsinteroperabilität zwischen der ersten Plattform und der zweiten Plattform zu bewerten; wobei das Verfahren **dadurch gekennzeichnet ist, dass** der Link ein taktischer Datenlink (Tactical Data Link, TDL) ist, und dass es die Schritte umfasst:
Parsen von Daten, die zumindest von einem Teil eines Standarddokuments abgeleitet sind, die sich auf den TDL beziehen, unter Verwendung eines Computersystems, um zumindest eine Modellvorlage auf Basis der TDL-Standarddokumente zu erzeugen;
Parsen von Actual-Platform-Implementation-Specification-Daten, die mit der ersten Plattform assoziiert sind, in Bezug auf die Modellvorlage unter Verwendung des Computersystems, um die Modelldaten zur ersten Plattform zu generieren;
Parsen von Actual-Platform-Implementation-Specification-Daten, die mit der zweiten Plattform assoziiert sind, in Bezug auf die Modellvorlage unter Verwendung des Computersystems, um die Modelldaten zur zweiten Plattform zu generieren; und
Durchführen der Bewertung einer Meldungsinteroperabilität zwischen der ersten Plattform und der zweiten Plattform unter Verwendung eines Meldungsinteroperabilitätsbewertungswerkzeugs im Computersystem, das konfiguriert ist zum:
- Analysieren der Modelldaten zur ersten und zur zweiten Plattform durch Vergleichen von jeweiligen Kommunikationscharakteristika der ersten und der zweiten Plattform darin, um zu ermitteln, ob die zweite Plattform in der Lage ist, zumindest einen Meldungstyp zu empfangen, der von der ersten Plattform gesendet wird, um die Meldungsinteroperabilität zu ermitteln, und
- Ausgeben eines Berichts, der die Analyse darstellt.

2. Verfahren nach Anspruch 1, wobei:
die Modelldaten zur ersten Plattform einen Satz von Meldungstypen spezifizieren, wobei zumindest mit manchen der Meldungstypen jeweils ein Datenfeldbezeichner (Data Field Identifier, DFI)/Datennutzungsbezeichner (Data Use Identifier, DUI) und null oder mehr assoziierte Datenelemente (Data Item, DIs) assoziiert sind;
die Modelldaten zur zweiten Plattform einen Satz von Meldungstypen spezifizieren, wobei zumindest mit manchen der Meldungstypen jeweils ein Datenfeldbezeichner, DFI, / Datennutzungsbezeichner, DUI, und null oder mehr assoziierte Datenelemente, DIs, assoziiert sind; und
wobei das Prüfen, ob die zweite Plattform in der Lage ist, den von der ersten Plattform gesendeten Meldungstyp zu empfangen, das Prüfen beinhaltet, ob der assoziierte DFI/DUI und die assoziierten DIs eines Meldungstyps passende Sende-/Empfangscharakteristika in den Modelldaten zur ersten und zur zweiten Plattform aufweisen.

3. Verfahren nach Anspruch 1, wobei die Modellvorlage ein ausführbares Modell umfasst, z. B. ein XMF- oder ein Eclipse-Modelling-Framework-EMF-Dokument.

4. Verfahren nach einem der Ansprüche 1 bis 3, wobei das TDL-Standarddokument ein Link-16-Standard-Dokument beinhaltet.

5. Verfahren nach einem der Ansprüche 1 bis 4, wobei Meldungsinformationen in der Modellvorlage von zumindest einem Teil eines Datenwörterbuchabschnitts des Standarddokuments abgeleitet sind.

6. Verfahren nach einem der vorstehenden Ansprüche, wobei Meldungsinformationen in der Modellvorlage von zumindest einem Teil eines Nachrichtenkatalogabschnitts des Standarddokuments abgeleitet sind.

7. Verfahren nach Anspruch 5 oder 6, wobei Meldungssende-/Meldungsempfangsinformationen in den Modelldaten zur ersten Plattform und in den Modelldaten zur zweiten Plattform von einem J-Meldung-Sende/-Empfangsabschnitt der Actual Platform Implementation Specification abgeleitet sind.

8. Verfahren nach Anspruch 7, wenn von Anspruch 2 abhängig, wobei die Meldungssende-/Meldungsempfangsinformationen verwendet werden, um einem Meldungstyp DFI- und/oder DUI-Daten zu assoziierten.

9. Computersystem, das einen Prozessor (121) und einen Speicher (121) umfasst und eine Schnittstelle zum Empfangen von Actual-Platform-Implementation-Specification-Daten, die mit einer ersten und einer zweiten Plattform assoziiert sind, die über einen Link kommunizieren, beinhaltet und auf den ein Computerprogramm zur Ausführung geladen ist, das so konfiguriert ist, dass es ein Verfahren zum Bewerten einer Meldungsinteroperabilität zwischen einer ersten Plattform (102A) und einer zweiten Plattform (102B) ausführt, die über einen taktischen Datenlink (104) kommunizieren, das die Schritte umfasst:
Parsen von Daten, die von zumindest einem Teil eines Standarddokuments abgeleitet sind, die sich auf den taktischen Datenlink beziehen, um zumindest eine Modellvorlage auf Basis des TDL-Standarddokuments zu erzeugen;
Parsen von Actual-Platform-Implementation-Specification-Daten, die mit der ersten Plattform assoziiert sind, in Bezug auf die Modellvorlage, um Modelldaten zur ersten Plattform zu generieren;
Parsen von Actual-Platform-Implementation-Specification-Daten, die mit der zweiten Plattform assoziiert sind, in Bezug auf die Modellvorlage, um Modelldaten zur zweiten Plattform zu generieren; und
Durchführen einer Bewertung einer Meldungsinteroperabilität zwischen der ersten Plattform und der zweiten Plattform durch:
- Analysieren der Modelldaten zur ersten und zur zweiten Plattform durch Vergleichen von jeweiligen Kommunikationscharakteristika der ersten und der zweiten Plattform darin, um zu ermitteln, ob die zweite Plattform in der Lage ist, zumindest einen Meldungstyp zu empfangen, der von der ersten Plattform gesendet wird, um die Meldungsinteroperabilität zu ermitteln, und
- Ausgeben eines Berichts, der die Analyse darstellt.

10. System nach Anspruch 9, wobei sich das System auf einer Plattform (102) befindet, die so konfiguriert ist, dass sie über den TDL (104) kommuniziert.

11. Computerprogrammelement, das umfasst: ein Computercodemittel, um den Computer zu veranlassen, ein Verfahren nach einem der Ansprüche 1 bis 8 durchzuführen.

## Revendications

1. Procédé, mis en oeuvre dans un système informatique incluant un processeur (121) et une mémoire (122) pour évaluer une interopérabilité de messages entre une première plateforme (102A) et une seconde plateforme (102B) communiquant sur une liaison (104), le procédé comprenant les étapes ci-dessous consistant à :
obtenir (204) des premières données de modèle de plateforme représentant des informations de transmission / réception de messages spécifiques à la plateforme sur la liaison pour la première plateforme ;
obtenir (204) des secondes données de modèle de plateforme représentant des informations de transmission / réception de messages spécifiques à la plateforme sur la liaison pour la seconde plateforme ; et
utiliser (206) les premières données de modèle de plateforme et les secondes données de modèle de plateforme en vue d'évaluer une interopérabilité de messages entre la première plateforme et la seconde plateforme ; le procédé étant **caractérisé en ce que** ladite liaison est une liaison de données tactiques, TDL, et **en ce qu'**il comprend les étapes ci-dessous consistant à :
analyser, en utilisant ledit système informatique, des données dérivées d'au moins une partie d'un document de normes relatif à la liaison TDL en vue de générer au moins un gabarit de modèle sur la base du document de normes de liaison TDL ;
analyser, en utilisant ledit système informatique, des données de spécification de mise en oeuvre de plateforme en cours associées à ladite première plateforme, relativement audit gabarit de modèle, en vue de générer lesdites premières données de modèle de plateforme ;
analyser, en utilisant ledit système informatique, des données de spécification de mise en oeuvre de plateforme en cours associées à ladite seconde plateforme, relativement audit gabarit de modèle, en vue de générer lesdites secondes données de modèle de plateforme ; et
mettre en oeuvre ladite évaluation d'interopérabilité de messages entre la première plateforme et la seconde plateforme, en utilisant un outil d'évaluation d'interopérabilité de messages dans le système informatique, configuré de manière à :
- analyser lesdites premières et secondes données de modèle de plateforme en comparant dans celles-ci des caractéristiques de communication respectives desdites première et seconde plateformes en vue de déterminer si ladite seconde plateforme est apte à recevoir au moins un type de message envoyé par ladite première plateforme afin de déterminer l'interopérabilité de messages ; et
- générer en sortie un rapport représentatif de ladite analyse.

2. Procédé selon la revendication 1, dans lequel :
les premières données de modèle de plateforme spécifient un ensemble de types de messages, dans lequel au moins certains des types de messages présentent chacun un identifiant de champ de données, DFI, / identifiant d'utilisation de données associé, DUI, et zéro ou plusieurs éléments de données associés, DI ;
les secondes données de modèle de plateforme spécifient un ensemble de types de messages, dans lequel au moins certains des types de messages présentent chacun un identifiant de champ de données, DFI, / identifiant d'utilisation de données associé, DUI, et zéro ou plusieurs éléments de données associés, DI ; et
dans lequel l'étape consistant à vérifier si la seconde plateforme est apte à recevoir le type de message envoyé par la première plateforme consiste à vérifier si l'identifiant DFI/DUI associé et les éléments DI d'un dit type de message présentent des caractéristiques de transmission / réception correspondantes dans les premières et les secondes données de modèle de plateforme.

3. Procédé selon la revendication 1, dans lequel le gabarit de modèle comprend un modèle exécutable, par exemple, un document d'environnement XMF ou un document d'environnement de modélisation d'éclipse, EMF.

4. Procédé selon l'une quelconque des revendications 1 à 3, dans lequel le document de normes de liaison TDL comprend un document de normes de liaison 16.

5. Procédé selon l'une quelconque des revendications 1 à 4, dans lequel des informations de messages dans le gabarit de modèle sont dérivées d'au moins une partie d'une partie de dictionnaire de données du document de normes.

6. Procédé selon l'une quelconque des revendications précédentes, dans lequel des informations de messages dans le gabarit de modèle sont dérivées d'au moins une partie d'une partie de catalogue de messages du document de normes.

7. Procédé selon la revendication 5 ou 6, dans lequel des informations de transmission / réception de messages dans les premières données de modèle de plateforme et les secondes données de modèle de plateforme sont dérivées d'une partie de transmission / réception de messages J de la spécification de mise en oeuvre de plateforme en cours.

8. Procédé selon la revendication 7, lorsqu'elle dépend de la revendication 2, dans lequel les informations de transmission / réception de messages sont utilisées en vue d'associer des données d'identifiant DFI et/ou d'identifiant DUI à un type de message.

9. Système informatique comprenant un processeur (121) et une mémoire (121) et incluant une interface destinée à recevoir des données de spécification de mise en oeuvre de plateforme en cours associées à des première et seconde plateformes communiquant sur une liaison, et sur lequel est chargé, à des fins d'exécution, un programme informatique configuré de manière à exécuter un procédé d'évaluation d'interopérabilité de messages entre une première plateforme (102A) et une seconde plateforme (102B) communiquant sur une liaison de données tactiques (104), comprenant les étapes ci-dessous consistant à :
analyser des données dérivées d'au moins une partie d'un document de normes connexe à la liaison de données tactiques en vue de générer au moins un gabarit de modèle sur la base du document de normes de liaison TDL ;
analyser des données de spécification de mise en oeuvre de plateforme en cours associées à ladite première plateforme, relativement audit gabarit de modèle, en vue de générer des premières données de modèle de plateforme ;
analyser des données de spécification de mise en oeuvre de plateforme en cours associées à ladite seconde plateforme, relativement audit gabarit de modèle, en vue de générer des secondes données de modèle de plateforme ; et
mettre en oeuvre une évaluation d'interopérabilité de messages entre la première plateforme et la seconde plateforme par :
- l'analyse desdites premières et secondes données de modèle de plateforme, en comparant dans celles-ci des caractéristiques de communication respectives desdites première et seconde plateformes, en vue de déterminer si ladite seconde plateforme est apte à recevoir au moins un type de message envoyé par ladite première plateforme, afin de déterminer l'interopérabilité de messages ; et
- la génération en sortie d'un rapport représentatif de ladite analyse.

10. Système selon la revendication 9, dans lequel le système est embarqué dans une plateforme (102) configurée de manière à communiquer sur la liaison TDL (104).

11. Élément de programme informatique comprenant : un moyen de code informatique pour amener l'ordinateur à exécuter un procédé selon l'une quelconque des revendications 1 à 8.
